# EUROPEAN PATENT APPLICATION

(11) **EP 4 789 992 A1**
(43) Date of publication of application: **12.08.2026**
(21) Application number: 24877339.2
(22) Date of filing: 16.05.2024
(51) Int. Cl.: B65G 65/00, B65G 65/32, B65G 65/40, B25J 5/00, B25J 11/00, A23P 20/20

(54) **AUTOMATIC METERING CONVEYING SYSTEM AND CONTROL METHOD OF AUTOMATIC METERING CONVEYING SYSTEM**

(30) Priority: 11.10.2023 KR 20230135229
(71) Applicant: CJ Cheiljedang Corporation, Seoul 04560 (KR)
(72) Inventor: LIM, Hyung Sub, Seoul 04560 (KR); KWAK, Dong Ju, Seoul 04560 (KR)
(74) Representative: Meissner Bolte Partnerschaft mbB
(86) International application number: PCT/KR2024/006687
(87) International publication number: WO 2025/079799

(57) **Abstract**

Disclosed are an automatic metering conveying system and a control method of the automatic metering conveying system according to an embodiment. The system may comprise: a frozen ingredient-conveying unit provided to convey frozen ingredients; a frozen ingredient hopper unit provided to discharge the frozen ingredients supplied by the frozen ingredient-conveying unit; a raw ingredient-conveying unit that is distinct from the frozen ingredient-conveying unit and provided to convey raw ingredients; a raw ingredient hopper unit that is distinct from the frozen ingredient hopper unit and provided to store and discharge the raw ingredients supplied by the raw ingredient-conveying unit; and a processor for controlling the frozen ingredient-conveying unit and the raw ingredient-conveying unit such that the frozen ingredient-conveying unit stops moving on the basis of a first preset amount of frozen ingredients being accommodated in the frozen ingredient hopper unit and the raw ingredient-conveying unit stops moving on the basis of a second preset amount of raw ingredients being accommodated in the raw ingredient hopper unit.

## Description

### [Technical Field]

### [Cross-Reference to Related Application]

The present application claims priority to Korean Patent Application No. 10-2023-0135229 filed on October 11, 2023, and all contents disclosed in the specification and drawings of the corresponding application are incorporated herein by reference.

### [Technical Field]

The present disclosure relates to an automatic weighing and conveying system and a method for controlling the automatic weighing and conveying system.

### [Background Art]

An automatic weighing and conveying system is a system that is used in a facility system for manufacturing food and that weighs and conveys respective raw materials for manufacturing the food. Generally, when manufacturing food, respective raw materials that are used in manufacturing the food need to be preprocessed and weighed according to a manufacturing method of the food.

In this case, a system for weighing and conveying respective raw materials may include a conveying part that is provided to convey the respective raw materials and a hopper part for receiving and storing the respective raw materials delivered from the conveying part.

Each raw material may be conveyed by a user's manpower or may be conveyed by a conveying part, such as a conveyor belt. When each raw material is conveyed from the conveying part, a user may weigh the respective raw materials. However, recently, a need for a system that preprocesses respective raw materials and automatically weighs and automatically conveys the respective raw materials for more efficient manufacturing has emerged.

### [Disclosure]

### [Technical Problem]

An aspect of the present disclosure provides an automatic weighing and conveying system and a method for controlling the automatic weighing and conveying system that may automatically weigh frozen raw materials and raw materials while automatically convey the frozen raw materials and the raw materials.

### [Technical Solution]

According to an aspect of the present disclosure, an automatic weighing and conveying system includes a frozen raw material conveying part that conveys frozen raw material, a frozen raw material hopper part that stores and discharges the frozen raw material supplied by the frozen raw material conveying part, a raw material conveying part distinguished from the frozen raw material conveying part and that conveys raw material, a raw material hopper part distinguished from the frozen raw material hopper part and that stores and discharges the raw material supplied by the raw material conveying part, and a processor that controls the frozen raw material conveying part and the raw material conveying part to stop an operation of the frozen raw material conveying part based on the frozen raw material being accommodated in the frozen raw material hopper part in a first preset amount, and to stop an operation of the raw material conveying part based on the raw material being accommodated in the raw material hopper part in a second preset amount.

The automatic weighing and conveying system may further include a mobile robot that carries an accommodation part for accommodating the frozen raw material discharged from the frozen raw material hopper part and the raw material discharged from the raw material hopper part and conveys the accommodation part to a frozen raw material supply position at which the frozen raw material is supplied from the frozen raw material hopper part and to a raw material supply position at which the raw material is supplied from the raw material hopper part.

The processor may be configured to control the frozen raw material hopper part to discharge the frozen raw material from the frozen raw material hopper part based on the accommodation part being located at the frozen raw material supply position by the mobile robot, and control the raw material hopper part to discharge the raw material from the raw material hopper part based on the accommodation part being located at the raw material supply position by the mobile robot.

The automatic weighing and conveying system may further include a weighing part including a frozen raw material weighing part provided at the frozen raw material supply position to measure a weight of the accommodation part located at the frozen raw material supply position, and a raw material weighing part provided at the raw material supply position to measure a weight of the accommodation part located at the raw material supply position.

The frozen raw material weighing part may measure a first weight of the accommodation part upon arrival at the frozen raw material supply position and a second weight of the accommodation part after completion of discharge of the frozen raw material from the frozen raw material hopper part, and the raw material weighing part may measure a third weight of the accommodation part upon arrival at the raw material supply position and a fourth weight of the accommodation part after completion of discharge of the raw material from the raw material hopper part.

The processor may be configured to compare and determine whether a difference between the second weight and the first weight is within a preset weight range of the frozen raw material, and compare and determine whether a difference between the fourth weight and the third weight is within a preset weight range of the raw material.

The automatic weighing and conveying system may further include a control panel, and the processor may be configured to control the control panel to notify a user of the difference between the second weight and the first weight being outside the preset weight range of the frozen raw material or the difference between the fourth weight and the third weight being outside the preset weight range of the raw material, based on the difference between the second weight and the first weight being outside the preset weight range of the frozen raw material or the difference between the fourth weight and the third weight being outside the preset weight range of the raw material.

The automatic weighing and conveying system may further include a speaker, and the processor may be configured to control the speaker to output an alarm based on the difference between the second weight and the first weight being outside the preset weight range of the frozen raw material or the difference between the fourth weight and the third weight being outside the preset weight range of the raw material.

The raw material hopper part may be positioned at one side of the frozen raw material hopper part to be adjacent to the frozen raw material hopper part.

The frozen raw material supply position and the raw material supply position may be arranged in a line, and the automatic weighing and conveying system may further include a mobile robot conveying part that moves the mobile robot located at one of the frozen raw material supply position and the raw material supply position to the other of the frozen raw material supply position and the raw material supply position.

The mobile robot conveying part may be configured to move the mobile robot located at the frozen raw material supply position to the raw material supply position.

The processor may be configured to operate the mobile robot conveying part to convey the mobile robot located at the frozen raw material supply position to the raw material supply position based on the difference between the second weight and the first weight being within the preset weight range of the frozen raw material.

The mobile robot may be moved from the raw material supply position to a standby position based on the difference between the fourth weight and the third weight being within the preset weight range of the raw material.

The frozen raw material hopper part may include a first frozen raw material hopper that stores and discharges a first frozen raw material and a second frozen raw material hopper that stores and discharges a second frozen raw material distinguished from the first frozen raw material, and the frozen raw material conveying part may include a conveying rail that receives and conveys the first frozen raw material and the second frozen raw material, and a switching rail including one end that receives the first frozen raw material and the second frozen raw material from the conveying rail and conveys the first frozen raw material and the second frozen raw material to the first frozen raw material hopper and the second frozen raw material hopper from the conveying rail, respectively, and an opposite end having a position switched between the first frozen raw material hopper and the second frozen raw material hopper with respect to the one end.

The raw material hopper part may include a first raw material hopper that stores and discharges a first raw material and a second raw material hopper that stores and discharges a second raw material distinguished from the first raw material, and the raw material conveying part may include a conveying rail that receives and conveys the first raw material and the second raw material, and a switching rail including one end that receives the first raw material and the second raw material from the conveying rail and conveys the first raw material and the second raw material to the first raw material hopper and the second raw material hopper from the conveying rail, respectively, and an opposite end having a position switched between the first raw material hopper and the second raw material hopper with respect to the one end.

According to another aspect of the present disclosure, a method for controlling an automatic weighing and conveying system includes controlling a frozen raw material conveying part and a raw material conveying part to convey frozen raw material and raw material to a frozen raw material hopper part and a raw material hopper part, respectively, controlling the frozen raw material conveying part to stop operation based on the frozen raw material being accommodated in the frozen raw material hopper part in a first preset amount, controlling the raw material conveying part to stop operation based on the raw material being accommodated in the raw material hopper part in a second preset amount, moving a mobile robot carrying an accommodation part that receives the frozen raw material from the frozen raw material hopper part and the raw material from the raw material hopper part to a frozen raw material supply position at which the frozen raw material is supplied from the frozen raw material hopper part, controlling the frozen raw material hopper part to discharge the frozen raw material based on the accommodation part arriving at the frozen raw material supply position by the mobile robot, moving the mobile robot carrying the accommodation part located at the frozen raw material supply position to a raw material supply position at which the raw material is supplied from the raw material hopper part based on completion of discharge of the frozen raw material, and controlling the raw material hopper part to discharge the raw material based on the accommodation part arriving at the raw material supply position by the mobile robot.

The method may further include controlling a frozen raw material weighing part provided at the frozen raw material supply position to measure a first weight of the accommodation part based on the accommodation part arriving at the frozen raw material supply position, controlling the frozen raw material weighing part to measure a second weight of the accommodation part based on completion of discharge of the frozen raw material from the frozen raw material hopper part, comparing and determining whether a difference between the second weight and the first weight is within a preset weight range of the frozen raw material, and controlling a control panel to notify a user based on the difference between the second weight and the first weight being outside the preset weight range of the frozen raw material.

The method may further include controlling a raw material weighing part provided at the raw material supply position to measure a third weight of the accommodation part based on the accommodation part arriving at the raw material supply position, controlling the raw material weighing part to measure a fourth weight of the accommodation part based on completion of discharge of the raw material from the raw material hopper part, comparing and determining whether a difference between the fourth weight and the third weight is within a preset weight range of the raw material, and controlling the control panel to notify a user based on the difference between the fourth weight and the third weight being outside the preset weight range of the raw material.

The method may further include operating a mobile robot conveying part that conveys the mobile robot from the frozen raw material supply position to the raw material supply position based on the difference between the second weight and the first weight being within the preset weight range of the frozen raw material.

The method may further include moving the mobile robot from the raw material supply position to a standby position based on the difference between the fourth weight and the third weight being within the preset weight range of the raw material.

### [Advantageous Effects]

According to an embodiment of the present disclosure, because the frozen raw materials and the raw materials may be weighed while being automatically conveyed, a conveying speed and a weighing speed of the raw materials may be increased.

According to an embodiment of the present disclosure, because the frozen raw materials and the raw materials may be automatically weighed, a weighing accuracy of the raw materials may be improved.

According to an embodiment of the present disclosure, because the mobile robot may move the accommodation part for accommodating the raw materials and the hopper part may be controlled according to a position of the mobile robot, the weighing of the raw materials may be performed without being stopped so that productivity may be improved.

### [Description of Drawings]

FIG. 1 is a schematic view of an automatic weighing and conveying system according to an embodiment of the present disclosure.
FIG. 2 is a front view of a raw material hopper part according to an embodiment of the present disclosure.
FIG. 3 is a front view of a frozen raw material hopper part according to an embodiment of the present disclosure.
FIG. 4 is a side view of a conveying part and a hopper part according to an embodiment of the present disclosure.
FIG. 5 is a front view of a frozen raw material hopper part according to another embodiment of the present disclosure.
FIG. 6 is a side view of a conveying part and a hopper part according to another embodiment of the present disclosure.
FIG. 7 is a front view of a frozen raw material hopper part according to still another embodiment of the present disclosure.
FIG. 8 is a side view of a conveying part and a hopper part according to still another embodiment of the present disclosure.
FIG. 9 is a front view of a frozen raw material hopper part according to still another embodiment of the present disclosure.
FIG. 10 is a side view of a conveying part and a hopper part according to still another embodiment of the present disclosure.
FIG. 11 is a front view of a frozen raw material hopper part according to still another embodiment of the present disclosure.
FIG. 12 is a front view of a frozen raw material hopper part according to still another embodiment of the present disclosure.
FIG. 13 is a side view of a conveying part and a hopper part according to still another embodiment of the present disclosure.
FIG. 14 is a perspective view of a mobile robot according to an embodiment of the present disclosure.
FIG. 15 is a front view of a mobile robot according to an embodiment of the present disclosure.
FIG. 16 is a side view of a mobile robot according to an embodiment of the present disclosure.
FIG. 17 is a perspective view of a mobile robot according to another embodiment of the present disclosure.
FIG. 18 is a side view of a mobile robot that supports an accommodation part according to another embodiment of the present disclosure.
FIG. 19 is a block diagram of an automatic weighing and conveying system according to an embodiment of the present disclosure.
FIGS. 20 to 22 are flowcharts illustrating a method for controlling an automatic weighing and conveying system according to an embodiment of the present disclosure.
FIG. 23 is a schematic view of an automatic weighing and conveying system according to another embodiment of the present disclosure.
FIG. 24 is a schematic view of an automatic weighing and conveying system according to still another embodiment of the present disclosure.
FIG. 25 is a schematic view of an automatic weighing and conveying system according to still another embodiment of the present disclosure.
FIG. 26 is a schematic view of an automatic weighing and conveying system according to still another embodiment of the present disclosure.

### [Mode for Invention]

Hereinafter, some embodiments of the present disclosure will be described in detail with reference to the accompanying drawings. In the drawings, the same reference numerals will be used throughout to designate the same or equivalent components. In describing embodiments of the present disclosure, detailed descriptions associated with well-known functions or configurations will be omitted if they may make subject matters of the present disclosure unnecessarily obscure.

In the specification, a forward/rearward direction, a leftward/rightward direction, and an upward/downward direction are referred for convenience, and may be directions that are perpendicular to each other. In the specification, a horizontal direction and a vertical direction are referred for convenience, and may be directions that are perpendicular to each other. However, the directions are determined relatively to a direction, in which components of an automatic weighing and conveying system are arranged, and the upward/downward direction does not necessarily mean a vertical direction.

Additionally, terms including ordinal numbers, such as "first," "second," etc., used herein may be used to describe various components, but the components are not limited by the terms, and the terms are used only for the purpose of distinguishing one component from another. For example, without departing from the scope and spirit of the present disclosure, a first component may be referred to as a second component, and similarly, the second component may be referred to as the first component. The term "and/or" includes any combination of a plurality of related listed items or any one of the plurality of related listed items.

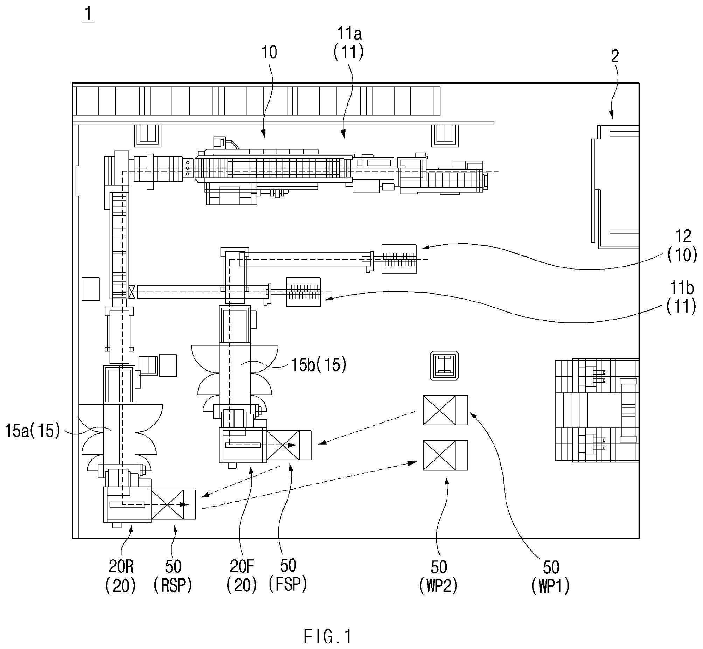

FIG. 1 is a schematic view of an automatic weighing and conveying system according to an embodiment of the present disclosure. Referring to FIG. 1, an automatic weighing and conveying system 1 may be a system that conveys and weighs raw materials for manufacturing food. In general, when food is manufactured, it may be necessary to preprocess respective raw materials and to weigh the raw materials in preset proportions.

In particular, the automatic weighing and conveying system 1 according to an embodiment of the present disclosure may be an equipment system that manufactures dumplings. Dumplings may require dumpling wrappers and respective raw materials that are inserted into the dumpling wrappers. The automatic weighing and conveying system 1 according to an embodiment of the present disclosure may be a system that preprocesses respective raw materials and pre-weighs the respective raw materials in preset proportions before the respective raw materials are mixed and inserted into dumpling wrappers.

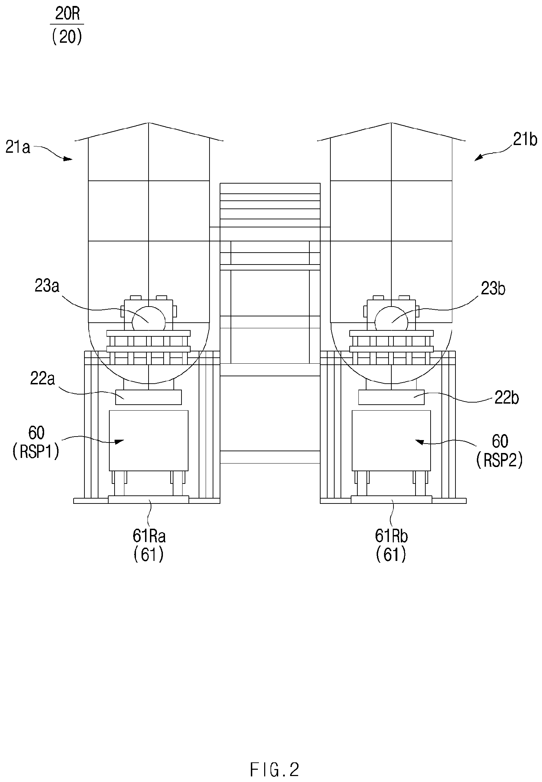

In general, manpower may be required when respective raw materials are preprocessed and conveyed or weighed. In contrast, in the automatic weighing and conveying system 1 according to an embodiment of the present disclosure, when respective raw materials are placed on a conveying part 10, the conveying part 10 may convey the respective raw materials and automatically deliver the respective raw materials to a hopper part 20, and the hopper part 20 may discharge the respective raw materials in a predetermined amount. Furthermore, respective raw materials that are discharged from the hopper part 20 may be stored through an accommodation part 60 (see FIG. 2), and the accommodation part 60 may be moved by a mobile robot 50.

The automatic weighing and conveying system 1 may include a raw material storage part 2 that stores or supplies respective raw materials in an original state. The raw material storage part 2 may be a component in which respective raw materials are stored before raw materials that are stored at room temperature and frozen raw materials that are stored in a frozen state are delivered to a user or a mobile robot 50. As an example, the raw material storage part 2 may be provided as a refrigerator that is configured to store the raw material in a refrigerated state or in a frozen state.

Respective raw materials may be delivered from the raw material storage part 2 to a user or a mobile robot 50 and may be sorted and delivered to a raw material conveying part 11 and a frozen raw material conveying part 12 depending on a state of each raw material.

For example, chives or green onions that may be stored at room temperature may be delivered from the raw material storage part 2 to the raw material conveying part 11 by a user or a mobile robot 50. Preferably, because chives and green onions have different properties as raw materials, the chives and the green onions may be delivered to the raw material conveying part 11 at different times, or may be conveyed through a first raw material conveying part 11a and a second raw material conveying part 11b that are different conveying parts, respectively.

The raw material may include a first raw material and a second raw material that are classified depending on properties of the raw materials.

In contrast, the frozen raw material that may be stored in a frozen state may include, for example, frozen chives or frozen green onions. The frozen raw material as described above may be delivered from the raw material storage part 2 to the frozen raw material conveying part 12 by a user or by the mobile robot 50.

The frozen raw material may include a first frozen raw material, a second frozen raw material, and a third frozen raw material that are classified depending on properties of the frozen raw materials.

The conveying part 10 may include a raw material conveying part 11 that is configured to convey the raw material, and a frozen raw material conveying part 12 that is distinguished from the raw material conveying part 11 and that is configured to convey the frozen raw material. The raw material conveying part 11 and the frozen raw material conveying part 12 may be provided as different conveying lines, respectively. A reason why the raw material conveying part 11 and the frozen raw material conveying part 12 are provided as different conveying lines may be to preprocess and convey the frozen raw material while simultaneously preprocessing and conveying the raw material.

More specifically, in the raw material conveying part 11, the raw material may be washed or sliced, and in the frozen raw material conveying part 12, the frozen raw material may be crushed. However, the present disclosure is not limited thereto, and a preprocessing process may be performed separately from a conveying process.

The raw material conveying part 11 may be provided as a conveying line having an "L" shape. While the raw material is conveyed through the raw material conveying part 11, the raw material may be preprocessed. Furthermore, the raw material may be preprocessed before the raw material is delivered to the raw material conveying part 11.

The raw material conveying part 11 may include a first raw material conveying part 11a for conveying fresh chives, and a second raw material conveying part 11b for conveying fresh green onions.

The raw material conveying part 11 may deliver the respective raw materials to the raw material hopper part 20R.

The frozen raw material conveying part 12 may be provided as a conveying line having an "L" shape. While the frozen raw material is conveyed through the frozen raw material conveying part 12, the frozen raw material may be preprocessed. Furthermore, the frozen raw material may be preprocessed before the frozen raw material is delivered to the frozen raw material conveying part 12. A length of a conveying line of the frozen raw material conveying part 12 may be provided to be shorter than a length of a conveying line of the raw material conveying part 11.

More specifically, the frozen raw material conveying part 12 may include a crushing process and a sorting process. A crushing process of the frozen raw material conveying part 12 may include a process of crushing the frozen chives, the frozen green onions, or other frozen raw materials that are being conveyed, so that clumping therebetween may be prevented. In particular, because the frozen raw materials are provided such that each of the frozen raw materials is frozen, and thus tend to adhere to each other, the crushing process may be performed to prevent such adhesion. As described above, the crushing process may include a process in which the frozen raw materials that are being conveyed are separated or crushed while falling downward.

Furthermore, a sorting process of the frozen raw material conveying part 12 may include a process of sorting the respective frozen raw materials by using an optical sorter (for example, a color sorter). The crushing process that is performed prior to the sorting process may also be provided to separate the respective raw materials for smooth sorting in the sorting process.

As described above, the frozen raw material conveying part 12 may deliver the respective frozen raw materials to a frozen raw material hopper part 20F that will be described later, after the crushing process and the sorting process are performed.

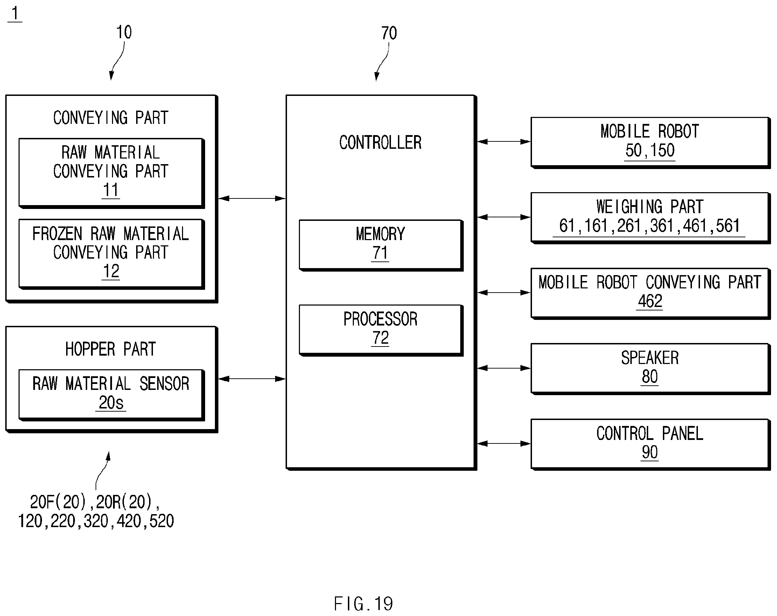

The raw material conveying part 11 and the frozen raw material conveying part 12 may deliver the respective raw materials to the raw material hopper part 20R and the frozen raw material hopper part 20F, respectively, based on that a stored raw material in the hopper parts 20R and 20F sensed by a raw material sensor 20s (see FIG. 19), which will be described later, is stored in an amount less than a reference value.

The raw material conveying part 11 may be connected to the raw material hopper part 20R for classifying and storing the raw materials depending on a type of the raw material. The raw material hopper part 20R may be configured to store and discharge the raw material supplied by the raw material conveying part 11. The raw material hopper part 20R may be provided with a single hopper to discharge the first raw material and the second raw material with a time difference, or may be provided with a plurality of hoppers to discharge the first raw material and the second raw material from the respective hoppers.

For example, when the raw material is classified into fresh chives and fresh green onions, the raw material hopper part 20R may discharge the fresh chives and the fresh green onions from a single hopper with a time difference, or may be provided with a pair of hoppers such that the respective raw materials are discharged through a first hopper for only the fresh chives and a second hopper for only the fresh green onions. The respective hoppers will be described later.

The frozen raw material conveying part 12 may be connected to the frozen raw material hopper part 20F for classifying and storing the frozen raw materials depending on a type of the frozen raw material. The frozen raw material hopper part 20F may be configured to store and discharge the frozen raw material supplied by the frozen raw material conveying part 12. The frozen raw material hopper part 20F may be provided with a single hopper to discharge the frozen chives and the frozen green onions sequentially one raw material at a time, or may be provided with a plurality of hoppers to store the respective raw materials in the respective hoppers and to discharge the respective raw materials therefrom.

In the latter case, when the frozen raw material is classified into frozen chives and frozen green onions, the frozen raw material hopper part 20F may include a first hopper for the frozen chives, a second hopper for the frozen green onions, and a third hopper for other frozen raw materials. The respective hoppers will be described later.

Meanwhile, the raw material hopper part 20R and the frozen raw material hopper part 20F may be components for discharging the raw material stored in the respective hoppers by a preset amount. The raw material hopper part 20R may be provided to be distinguished from the frozen raw material hopper part 20F. Here, the preset amount may vary depending on a ratio of the respective raw materials. In general, a ratio of the respective raw materials may be determined depending on a volume of the accommodation part 60, and a preset amount of each raw material may vary to correspond to the ratio of the respective raw materials. Furthermore, the preset amount may mean a mass or a volume.

The raw material and the frozen raw material discharged from the raw material hopper part 20R and the frozen raw material hopper part 20F, respectively, may be accommodated in one accommodation part 60. Here, the accommodation part 60 is a component that is generally used, and may be understood as a component for accommodating the raw material therein.

The accommodation part 60 may be moved by the mobile robot 50. The mobile robot 50 may move the accommodation part 60, which is loaded thereon to accommodate the raw material discharged from the hopper part 20, from a first standby position WP1 to a supply position FSP and RSP at which the accommodation part 60 is placed to receive the raw material from the hopper part 20, and to a second standby position WP2 at which the accommodation part 60 is finally placed.

The supply positions FSP and RSP may include a frozen raw material supply position FSP, at which the frozen raw material is discharged from the frozen raw material hopper part 20F, and a raw material supply position RSP, at which the raw material is discharged from the raw material hopper part 20R.

The accommodation part 60 may be lifted at the first standby position WP1 by the mobile robot 50, transported, moved to the frozen raw material supply position FSP, and placed thereat. Thereafter, the accommodation part 60 may be moved from the frozen raw material supply position FSP to the raw material supply position RSP by the mobile robot 50 and may be placed again thereat. Thereafter, the accommodation part 60 may be moved from the raw material supply position RSP to the second standby position WP2 by the mobile robot 50.

The first standby position WP1 may be a position at which the mobile robot 50 stands by before being moved. The mobile robot 50 may lift the accommodation part 60 at the first standby position WP1 and transport the accommodation part 60.

The frozen raw material supply position FSP may be a position at which the mobile robot 50 stops or places the accommodation part 60, while carrying the accommodation part 60, so that the accommodation part 60 receives the respective frozen raw materials from the frozen raw material hopper part 20F.

The raw material supply position RSP may be a position at which the mobile robot 50 stops or places the accommodation part 60 after moving the accommodation part 60 from the frozen raw material supply position FSP, so that the accommodation part 60 receives the respective raw materials from the raw material hopper part 20R.

The second standby position WP2 may be a position at which the accommodation part 60 that has received the respective raw materials by a preset amount from the raw material hopper part 20R is transported and placed by the mobile robot 50.

In the automatic weighing and conveying system 1, a preset amount may be discharged for each raw material from each hopper part 20F and 20R, and weighing by the mobile robot 50 may be performed after discharge of all the raw materials is completed. This will be described later in more detail.

The first standby position WP1, the frozen raw material supply position FSP, the raw material supply position RSP, and the second standby position WP2 may be positions of the accommodation part 60 or may be positions of the mobile robot 50.

The accommodation part 60 may be lifted at the first standby position WP1 by the mobile robot 50 and placed at the frozen raw material supply position FSP to receive the frozen raw material, and may in turn be lifted again by the mobile robot 50 and placed at the raw material supply position RSP to receive the raw material, and may in turn be lifted again by the mobile robot 50 and moved to the second standby position WP2 and placed on a floor by the mobile robot 50. The accommodation part 60 that is placed on the floor at the second standby position WP2 may be delivered to a next process for manufacturing dumplings. In this process as well, the accommodation part 60 may be delivered by a user or by the mobile robot 50.

The mobile robot 50 may stand by at the first standby position WP1, load the accommodation part 60 at the first standby position WP1, temporarily stop at the frozen raw material supply position FSP, receive the frozen raw material by a preset amount in the accommodation part 60, and move to the raw material supply position RSP. The mobile robot 50 may temporarily stop at the raw material supply position RSP, receive the raw material by a preset amount in the accommodation part 60, move to the second standby position WP2, and place the accommodation part 60 at the second standby position WP2. The mobile robot 50 may receive electric power at the first standby position WP1 or at the second standby position WP2.

However, the mobile robot 50 is not limited to lifting the accommodation part 60 at the first standby position WP1, and the accommodation part 60 may be loaded onto the mobile robot 50 by a user.

As will be described later, the automatic weighing and conveying system 1 may include a controller 70 (see FIG. 19) for controlling the conveying part 10, the hopper part 20, and the mobile robot 50.

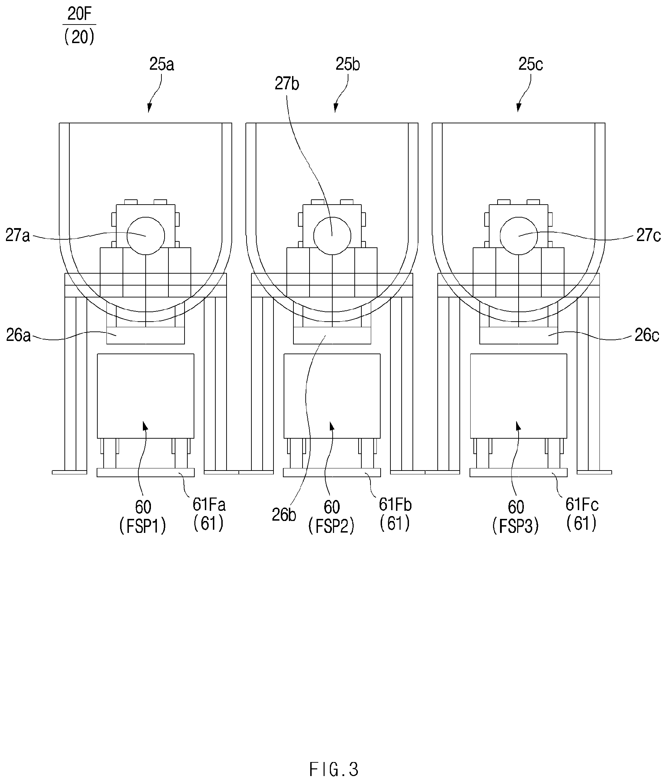

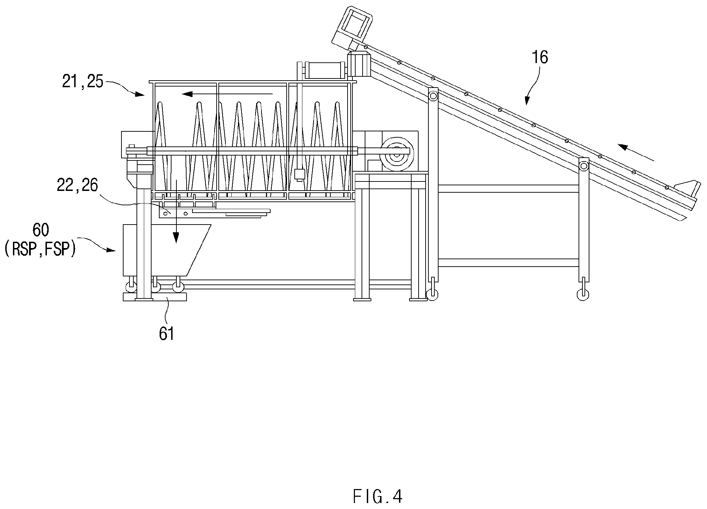

FIG. 2 is a front view of a raw material hopper part according to an embodiment of the present disclosure. FIG. 3 is a front view of a frozen raw material hopper part according to an embodiment of the present disclosure. FIG. 4 is a side view of a conveying part and a hopper part according to an embodiment of the present disclosure.

Referring to FIGS. 2 to 4, the raw material hopper part 20R may include a first raw material hopper 21a and a second raw material hopper 21b. The first raw material hopper 21a and the second raw material hopper 21b may receive and store the first raw material and the second raw material, respectively, by the raw material conveying part 11 (see FIG. 1). Here, the first raw material may be raw chives, and the second raw material may be raw green onions.

The first raw material hopper 21a may discharge the raw material stored in an interior of the first raw material hopper 21a by the first raw material operating device 23a. The second raw material hopper 21b may discharge the raw material stored in an interior of the second raw material hopper 21b by the second raw material operating device 23b.

The first raw material operating device 23a may discharge the first raw material accommodated in the first raw material hopper 21a through the first raw material discharge part 22a when the accommodation part 60 is located at the first raw material supply position RSP1. The first raw material operating device 23a may prevent the first raw material from being discharged through the first raw material discharge part 22a when a preset weight of the first raw material is discharged to the accommodation part 60.

The second raw material operating device 23b may discharge the second raw material accommodated in the second raw material hopper 21b through the second raw material discharge part 22b when the accommodation part 60 is located at the second raw material supply position RSP2. The second raw material operating device 23b may prevent the second raw material from being discharged through the second raw material discharge part 22b when a preset weight of the second raw material is discharged to the accommodation part 60.

The raw material hopper part 20R may include a first raw material conveying line and a second raw material conveying line that are provided in interiors of the first raw material hopper 21a and the second raw material hopper 21b, respectively.

More specifically, each of the first raw material hopper 21a and the second raw material hopper 21b may include a discharge gate (not illustrated) that opens and closes the raw material discharge parts 22a and 22b for discharging the first raw material and the second raw material, and a raw material conveying line for conveying the raw materials toward the discharge gate. The discharge gate may be formed at one side of each of the raw material hoppers 21a and 21b, and the raw material conveying line may be provided at a lower side of each of the raw material hoppers 21a and 21b.

Although not illustrated in the drawings, the first raw material operating device 23a and the second raw material operating device 23b may be components that operate or stop the raw material conveying lines that convey the respective raw materials. Here, the raw material conveying line may be a component such as a conveyor belt.

In other words, the first raw material operating device 23a may open and close the discharge gate of the first raw material hopper 21a and operate or stop the first raw material conveying line that conveys the first raw material in an interior of the first raw material hopper 21a to the discharge gate so as to discharge the first raw material. The raw material operating devices 23a and 23b may operate or stop the raw material conveying lines by the processor 72, which will be described later.

For example, the first raw material operating device 23a may, when the first raw material hopper 21a is filled with the first raw material and the accommodation part 60 is located at the first raw material supply position RSP1, operate the discharge gate of the first raw material hopper 21a and the first raw material conveying line so as to discharge the first raw material through the first discharge part 22a. Furthermore, the first raw material operating device 23a may, when supply of the first raw material to the first raw material hopper 21a is stopped or a preset weight of the first raw material is discharged, close the first discharge part 22a by the discharge gate of the first raw material hopper 21a and stop the conveying line so as to stop the first raw material from being discharged.

Similarly, an operation by the second raw material operating device 23b may correspond thereto, and the second raw material operating device 23b may open and close the discharge gate of the second raw material hopper 21b and operate or stop the second raw material conveying line that conveys the second raw material in the second raw material hopper 21b to the discharge gate so as to discharge the second raw material.

A raw material weighing part 61 may be provided at the first raw material supply position RSP1 and the second raw material supply position RSP2. The raw material weighing part 61R may include a first raw material weighing part 61Ra that is provided at the first raw material supply position RSP1 and a second raw material weighing part 61Rb that is provided at the second raw material supply position RSP2.

For example, the raw material weighing parts 61Ra and 61Rb may be weighing devices for measuring a weight of the accommodation part 60 that is located at the first raw material supply position RSP1 and the second raw material supply position RSP2, respectively.

The frozen raw material hopper part 20F may include a first frozen raw material hopper 25a, a second frozen raw material hopper 25b, and a third frozen raw material hopper 25c. The first to third frozen raw material hoppers 25a to 25c may respectively store frozen chives, frozen green onions, and other frozen raw materials that are different from the frozen chives and the frozen green onions.

The first frozen raw material operating device 27a that is mounted on the first frozen raw material hopper 25a may discharge the first frozen raw material through the first frozen raw material discharge part 26a. The second frozen raw material operating device 27b that is mounted on the second frozen raw material hopper 25b and the third frozen raw material operating device 27c that is mounted on the third frozen raw material hopper 25c may discharge the second frozen raw material and the third frozen raw material through the second frozen raw material discharge part 26b and the third frozen raw material discharge part 26c, respectively.

More specifically, the first frozen raw material operating device 27a may, when the first frozen raw material hopper 25a is filled with the first frozen raw material and the accommodation part 60 is located at the first frozen raw material supply position FSP1, open the first frozen raw material discharge part 26a through a discharge gate (not illustrated) of the first frozen raw material hopper 25a and operate a first frozen raw material conveying line so that the first frozen raw material may be discharged.

When a preset weight of the first frozen raw material is discharged through the first frozen raw material discharge part 26a, the first frozen raw material operating device 27a may close the discharge gate of the first frozen raw material hopper 25a and stop an operation of the first frozen raw material conveying line. As such, the first frozen raw material operating device 27a may control the discharge gate of the first frozen raw material hopper 25a to close the first frozen raw material discharge part 26a and may stop the first frozen raw material conveying line.

When the accommodation part 60 is located at the second frozen raw material supply position FSP2, the second frozen raw material operating device 27b may open the second frozen raw material discharge part 26b through a discharge gate of the second frozen raw material hopper 25b and operate a second frozen raw material conveying line so that the second frozen raw material may be discharged through the second frozen raw material discharge part 26b.

When a preset weight of the second frozen raw material is discharged through the second frozen raw material discharge part 26b, the second frozen raw material operating device 27b may control the discharge gate of the second frozen raw material hopper 25b to close the second frozen raw material discharge part 26b and may stop the second frozen raw material conveying line again.

When the accommodation part 60 is located at the third frozen raw material supply position FSP3, the third frozen raw material operating device 27c may open the third frozen raw material discharge part 26c through a discharge gate of the third frozen raw material hopper 25c and operate a third frozen raw material conveying line so that the third frozen raw material may be discharged through the third frozen raw material discharge part 26c.

When a preset weight of the third frozen raw material is discharged through the third frozen raw material discharge part 26c, the third frozen raw material operating device 27c may control the discharge gate of the third frozen raw material hopper 25c to close the third frozen raw material discharge part 26c and may stop the third frozen raw material conveying line again.

Similarly, the frozen raw material weighing parts 61Fa, 61Fb, and 61Fc that are provided at the first to third frozen raw material supply positions FSP1 to FSP3 may include a first frozen raw material weighing part 61Fa, a second frozen raw material weighing part 61Fb, and a third frozen raw material weighing part 61Fc that are provided to measure a weight of the accommodation part 60 that is located at the first to third frozen raw material supply positions FSP1 to FSP3.

As illustrated in FIG. 4, the conveying part 10 may include a switching rail 16 that is formed to be inclined.

As illustrated in FIG. 1, the raw material conveying part 11 may include a first conveying rail 15a that receives and conveys the raw material and a switching rail 16 that receives the raw material from the first conveying rail 15a and conveys the raw material to the raw material hopper part 20R.

Similarly, as illustrated in FIG. 1, the frozen raw material conveying part 12 may include a second conveying rail 15b that receives and conveys the frozen raw material and a switching rail 16 that receives the frozen raw material from the second conveying rail 15b and conveys the frozen raw material to the frozen raw material hopper part 20F.

That is, the switching rail 16 of the conveying part 10 may be inclined such that a height thereof increases as it becomes closer to the raw material hopper 21 and the frozen raw material hopper 25 so as to convey the raw material to upper sides of the raw material hopper 21 and the frozen raw material hopper 25. With this structure, the raw material conveying part 11 (see FIG. 1) may deliver the raw material to the raw material hopper 21, and the frozen raw material conveying part 12 may deliver the frozen raw material to the frozen raw material hopper 25.

In this case, when a plurality of types of raw materials are conveyed to the raw material conveying part 11, the raw materials may be sorted into the first raw material hopper 21a and the second raw material hopper 21b, respectively. For example, when the first raw material and the second raw material are conveyed by the raw material conveying part 11 with a time difference, the raw material conveying part 11 may be connected to the first raw material hopper 21a when the first raw material is conveyed, and the raw material conveying part 11 may be connected to the second raw material hopper 21b when the second raw material is conveyed.

Furthermore, when a plurality of types of frozen raw materials are conveyed to the frozen raw material conveying part 12, the frozen raw materials may be sorted into the first frozen raw material hopper 25a to the third frozen raw material hopper 25c, respectively. For example, the first frozen raw material, the second frozen raw material, and the third frozen raw material may be conveyed by the frozen raw material conveying part 12 with a time difference. When the first frozen raw material is conveyed, the frozen raw material conveying part 12 may be connected to the first frozen raw material hopper 25a, and when the second frozen raw material is conveyed, the frozen raw material conveying part 12 may be connected to the second frozen raw material hopper 25b. Furthermore, when the third frozen raw material is conveyed, the frozen raw material conveying part 12 may be connected to the third frozen raw material hopper 25c. However, the present disclosure is not limited thereto.

Furthermore, each of the raw materials may be moved toward the raw material discharge parts 22 and 26 along a conveying line that extends in a horizontal direction in interiors of the frozen raw material hopper 25 and the raw material hopper 21 and may be inserted into the accommodation part 60.

To have such a structure, the switching rail 16 of the frozen raw material conveying part 12 may include one end that receives the first to third frozen raw materials from the second conveying rail 15b and an opposite end of which a position is switched between the first to third frozen raw material hoppers 25a to 25c with respect to the one end.

Furthermore, the switching rail 16 of the raw material conveying part 11 may include one end that receives the first raw material and the second raw material from the first conveying rail 15a and an opposite end of which a position is switched between the first raw material hopper 21a and the second raw material hopper 21b with respect to the one end.

That is, the switching rail 16 may have a structure in which an opposite end is rotated with respect to one end.

When the frozen raw material or the raw material is supplied to each of the hoppers 21 and 25 through the switching rail 16, the frozen raw material or the raw material may be conveyed forward through a screw in each of the hoppers 21 and 25. Thereafter, the frozen raw material or the raw material may be supplied to the accommodation part 60 that has arrived at the frozen raw material supply position FSP or the raw material supply position RSP through the discharge parts 22 and 26.

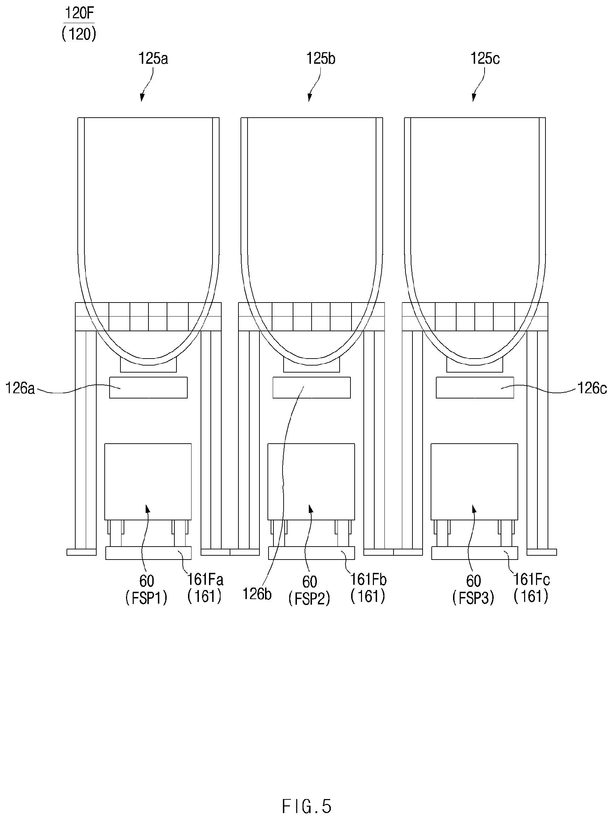

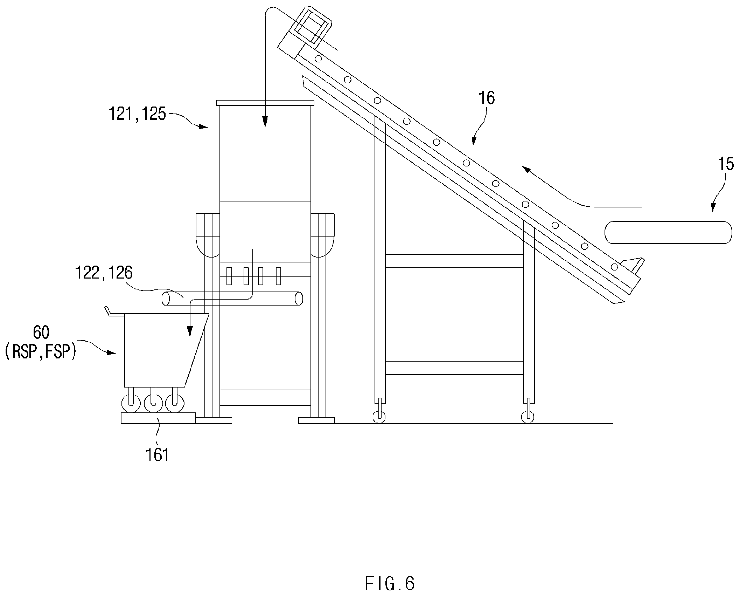

FIG. 5 is a front view of a frozen raw material hopper part according to another embodiment of the present disclosure. FIG. 6 is a side view of a conveying part and a hopper part according to another embodiment of the present disclosure.

Referring to FIGS. 5 and 6, a structure of the hopper part 120 according to another embodiment of the present disclosure will be described. Although the frozen raw material hopper part 120F is illustrated in FIG. 5, the raw material hopper part may also be provided in a corresponding structure, but a number of hoppers may be different.

The frozen raw material hopper part 120F may include first to third frozen raw material hoppers 125a to 125c. The first frozen raw material hopper 125a may discharge the first frozen raw material through the first frozen raw material discharge part 126a. Similarly, the second frozen raw material hopper 125b and the third frozen raw material hopper 125c may discharge the second frozen raw material and the third frozen raw material through the second frozen raw material discharge part 126b and the third frozen raw material discharge part 126c, respectively.

Unlike the hopper part 20 according to an embodiment of the present disclosure, in the hopper part 120 according to another embodiment of the present disclosure, the frozen raw material discharge part 126 and the raw material discharge part 122 may extend to one side in a horizontal direction from lower sides of the frozen raw material hopper 125 and the raw material hopper 121, respectively. In this case, the frozen raw material discharge part 126 and the raw material discharge part 122 may further extend in a horizontal direction toward opposite directions of the frozen raw material hopper 125 and the raw material hopper 121.

In this case, the frozen raw material discharge part 126 and the raw material discharge part 122 may be not only components for discharging the frozen raw material and the raw material, but also components for individually weighing a preset quantity of each raw material.

That is, the discharge parts 122 and 126 in the hopper part 120 according to another embodiment of the present disclosure may have a structure for discharging only a preset weight of each raw material to the accommodation part 60.

In this case, when the accommodation part 60 is located at the frozen raw material supply position FSP, the frozen raw material discharge part 126 may open and close the frozen raw material hopper 125 to discharge only a preset weight of the frozen raw material to the accommodation part 60.

Furthermore, when the accommodation part 60 is located at the raw material supply position RSP, the raw material discharge part 122 may open and close the raw material hopper 121 to discharge only a preset weight of the raw material to the accommodation part 60.

A weighing part 161 including the first to third frozen raw material weighing parts 161Fa to 161Fc may be provided at the first to third frozen raw material supply positions FSP1 to FSP3, respectively.

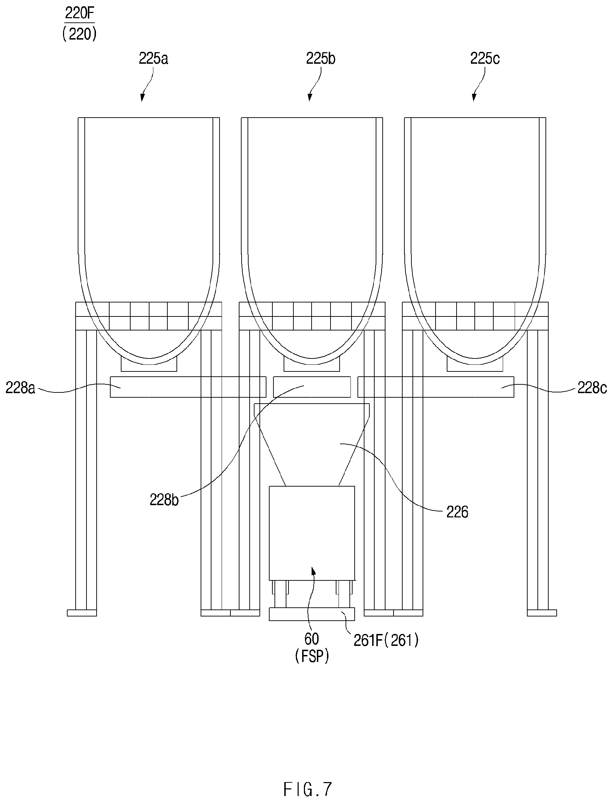

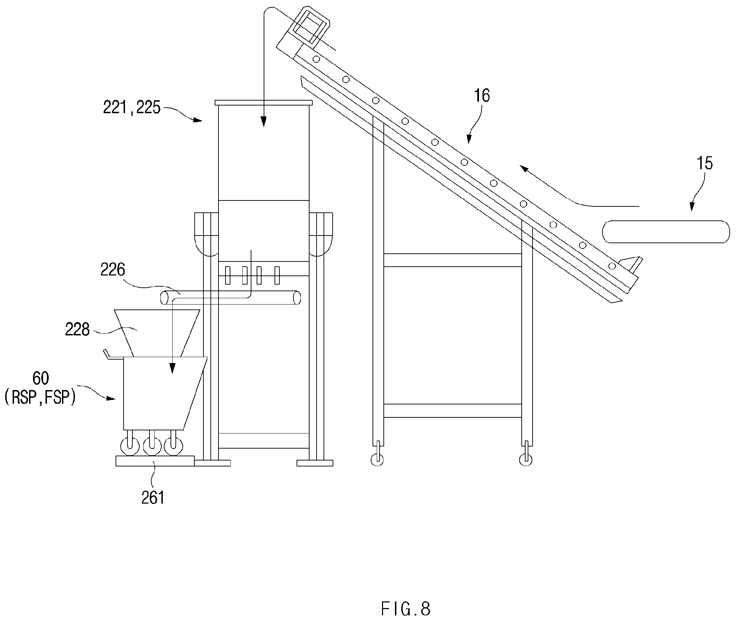

FIG. 7 is a front view of a frozen raw material hopper part according to still another embodiment of the present disclosure. FIG. 8 is a side view of a conveying part and a hopper part according to still another embodiment of the present disclosure.

Referring to FIGS. 7 and 8, a structure of the hopper part 220 according to still another embodiment of the present disclosure will be described. Although the frozen raw material hopper part 220F is illustrated in FIG. 7, the raw material hopper part may also be provided in a corresponding structure, but a number of hoppers may be different.

The frozen raw material hopper part 220F according to still another embodiment of the present disclosure may include the first to third frozen raw material hoppers 225a to 225c for storing the first to third frozen raw materials, respectively.

The first to third frozen raw material hoppers 225a to 225c may discharge the frozen raw materials through the first to third chutes 228a to 228c.

In other words, the first frozen raw material hopper 225a may discharge the first frozen raw material through the first chute 228a. The second frozen raw material hopper 225b and the third frozen raw material hopper 225c may discharge the second frozen raw material and the third frozen raw material through the second chute 228b and the third chute 228c, respectively.

With this structure, the accommodation part 60 may receive the frozen raw materials from the first frozen raw material hopper 225a to the third frozen raw material hopper 225c at the frozen raw material supply position FSP without being transported by the mobile robot 50, and the frozen raw materials may be supplied through the first chute 228a to the third chute 228c with a time difference.

Similarly, a frozen raw material weighing part 261F that is configured to measure a weight of the accommodation part 60 that is located at the frozen raw material supply position FSP may be provided at the frozen raw material supply position FSP.

As illustrated in FIG. 8, in the conveying part and the hopper part according to still another embodiment of the present disclosure, the switching rail 16 may receive the respective raw materials from the conveying rail 15 and supply the raw materials to the hoppers 221 and 225. Thereafter, each of the raw materials may be discharged from the hoppers 221 and 225 to the chute 228 by only a preset quantity at the discharge part 226 and may be supplied to the accommodation part 60.

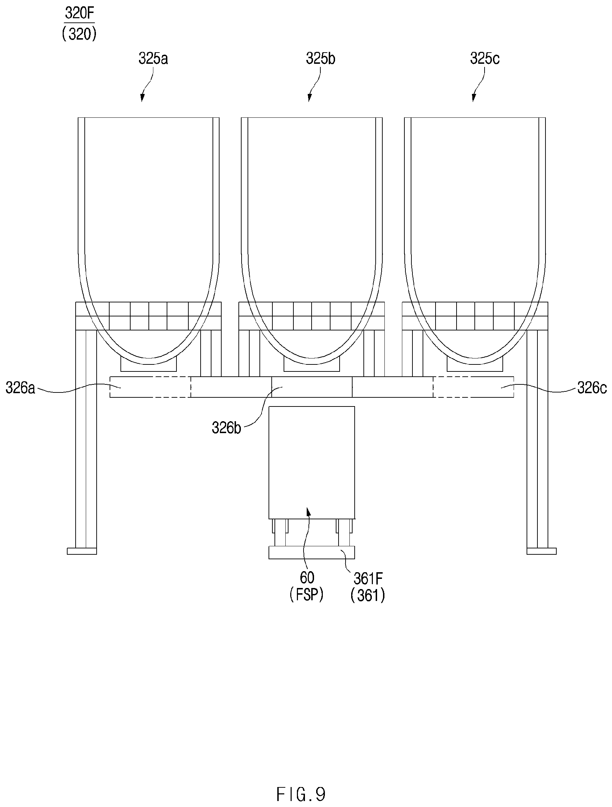

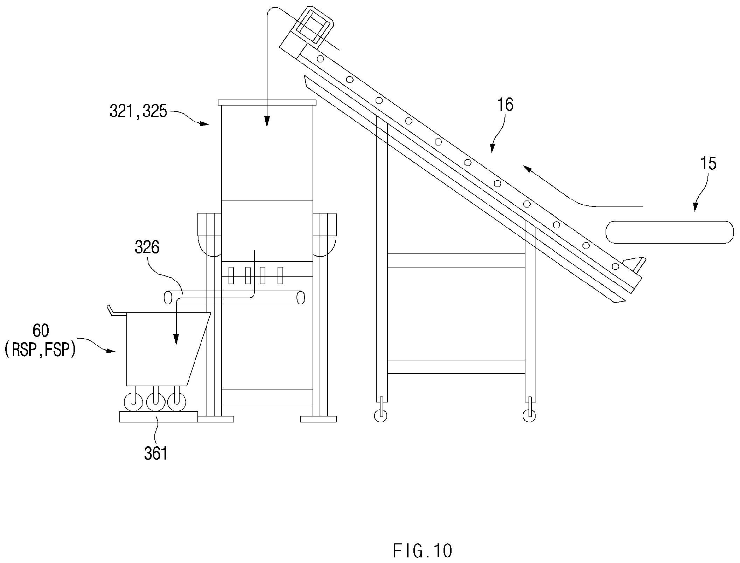

FIG. 9 is a front view of a frozen raw material hopper part according to still another embodiment of the present disclosure. FIG. 10 is a side view of a conveying part and a hopper part according to still another embodiment of the present disclosure.

Referring to FIGS. 9 and 10, a structure of the hopper part 320 according to still another embodiment of the present disclosure will be described. Although the frozen raw material hopper part 320F is illustrated in FIG. 9, the raw material hopper part may also be provided in a corresponding structure, but a number of hoppers may be different.

The frozen raw material hopper part 320F according to still another embodiment of the present disclosure may include the first to third frozen raw material hoppers 325a to 325c for storing the first to third frozen raw materials, respectively.

The first to third frozen raw material hoppers 325a to 325c may be connected to the frozen raw material discharge part 326. The frozen raw material discharge part 326 may include a first frozen raw material discharge part 326a that receives the first frozen raw material from the first frozen raw material hopper 325a, a second frozen raw material discharge part 326b that receives the second frozen raw material from the second frozen raw material hopper 325b, and a third frozen raw material discharge part 326c that receives the third frozen raw material from the third frozen raw material hopper 325c.

The frozen raw material discharge part 326 may be rotated such that only one of the first to third frozen raw material discharge parts 326a to 326c is connected to the accommodation part 60.

That is, the first to third frozen raw material discharge parts 326a to 326c may have a rotatable structure including one end at which one discharge part is adjacent to the accommodation part 60 and an opposite end that is switched between the respective frozen raw material hoppers 325a, 325b, and 325c.

In the frozen raw material supply position FSP according to still another embodiment of the present disclosure, because the respective frozen raw materials are supplied according to the frozen raw material discharge parts 326a, 326b, and 326c without the mobile robot 50 being moved, one frozen raw material weighing part 361F may be provided as a single component.

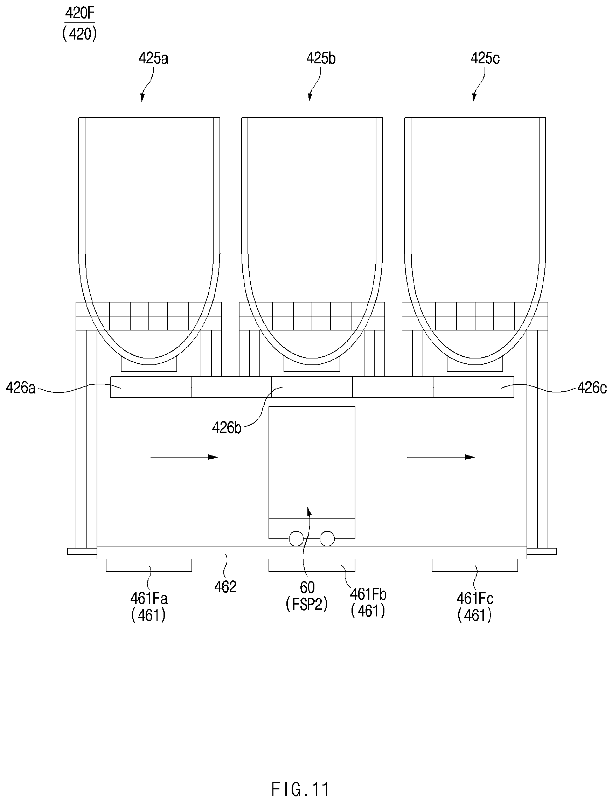

FIG. 11 is a front view of a frozen raw material hopper part according to still another embodiment of the present disclosure.

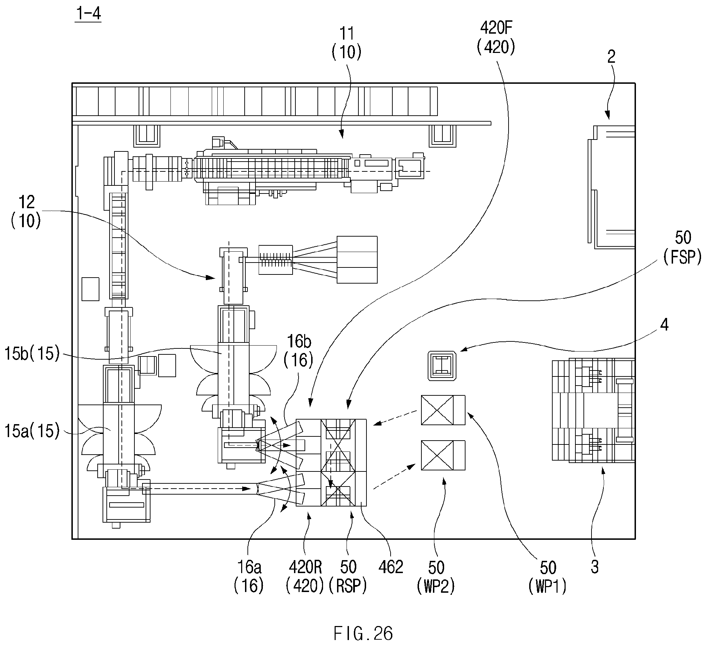

Referring to FIG. 11, a mobile robot conveying part 462 for conveying the mobile robot 50 (see FIG. 26) may be further provided at a lower side of the frozen raw material hopper part 420F.

The mobile robot conveying part 462 may be a device for sequentially moving the mobile robot 50 from the first frozen raw material supply position FSP1 to the second frozen raw material supply position FSP2 and the third frozen raw material supply position FSP3 and thereafter moving the mobile robot 50 from the first raw material supply position RSP1 to the second raw material supply position RSP2.

However, the present disclosure is not limited thereto, and the mobile robot conveying part 462 may move the mobile robot 50 from the first raw material supply position RSP1 to the second raw material supply position RSP2 and then move the mobile robot 50 to the first frozen raw material supply position FSP1 and thereafter to the second frozen raw material supply position FSP2 and the third frozen raw material supply position FSP3.

That is, in this case, the frozen raw material supply position FSP and the raw material supply position RSP may be arranged in a row, and the raw material hopper part 420R may be located at one side of the frozen raw material hopper part 420F such that the raw material hopper part 420R and the frozen raw material hopper part 420F are adjacent to each other.

The mobile robot conveying part 462 may move the mobile robot 50 that is located at any one of the frozen raw material supply position FSP or the raw material supply position RSP to the other one of the frozen raw material supply position FSP or the raw material supply position RSP.

With this structure, productivity and usability may be improved because the user or the mobile robot 50 does not need to apply an external force to move the accommodation part 60 while being supplied with the first to third frozen raw materials and the first raw material and the second raw material.

In this case, the first to third frozen raw material weighing parts 461Fa to 461Fc may be provided below the mobile robot conveying part 462 at positions corresponding to the first to third frozen raw material hoppers 425a to 425c, respectively.

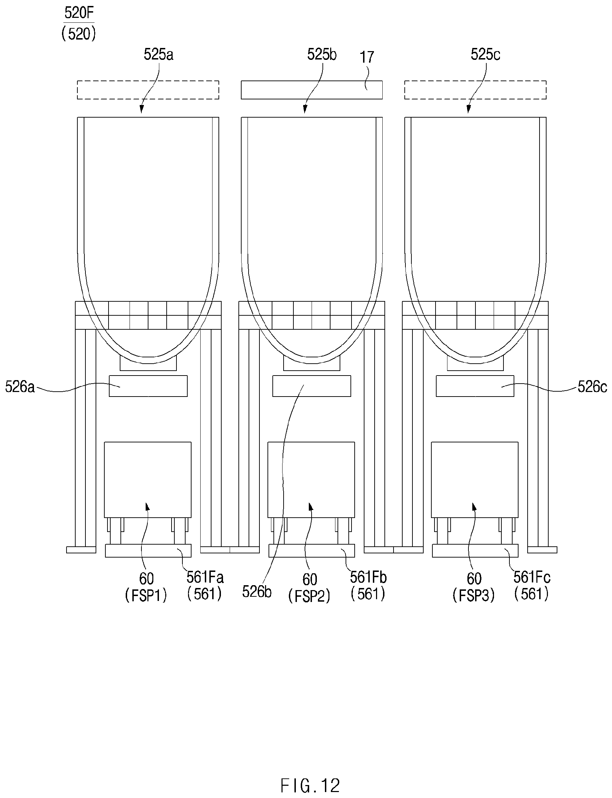

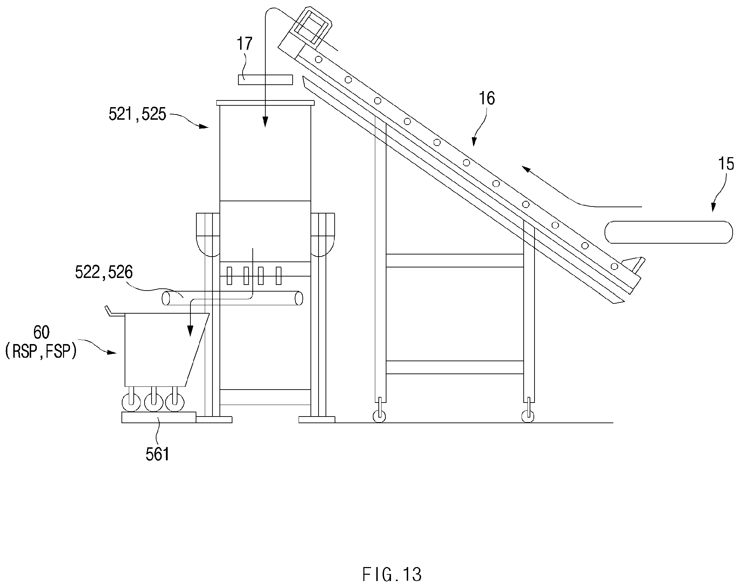

FIG. 12 is a front view of a frozen raw material hopper part according to still another embodiment of the present disclosure. FIG. 13 is a side view of a conveying part and a hopper part according to still another embodiment of the present disclosure.

Referring to FIGS. 12 and 13, a diverter rail 17 may be further included at upper sides of the frozen raw material hoppers 525a, 525b, and 525c of the frozen raw material hopper part 520F. The diverter rail 17 may be a component that is connected to a structure of the switching rail 16 in which positions of one end and an opposite end are fixed, rather than a structure of the switching rail 16 that is provided to be rotatable as described above.

In other words, the switching rail 16 according to still another embodiment illustrated in FIGS. 12 and 13 may have a structure in which a position thereof is fixed to merely convey the respective raw materials upward from the conveying rail 15 with a time difference, and instead, the diverter rail 17 may be rotated to supply the respective raw materials from the switching rail 16 to the first to third frozen raw material hoppers 525a to 525c.

Similarly, the first to third frozen raw material weighing parts 561Fa to 561Fc may be provided at the first to third frozen raw material supply positions FSP1 to FSP3.

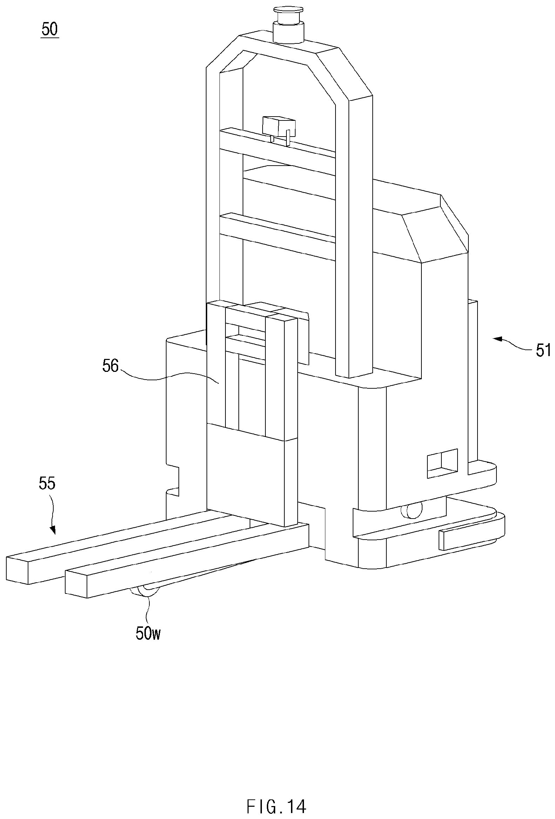

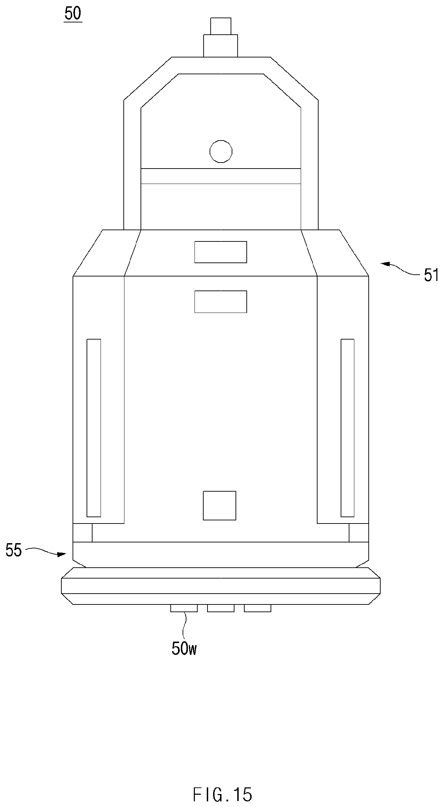

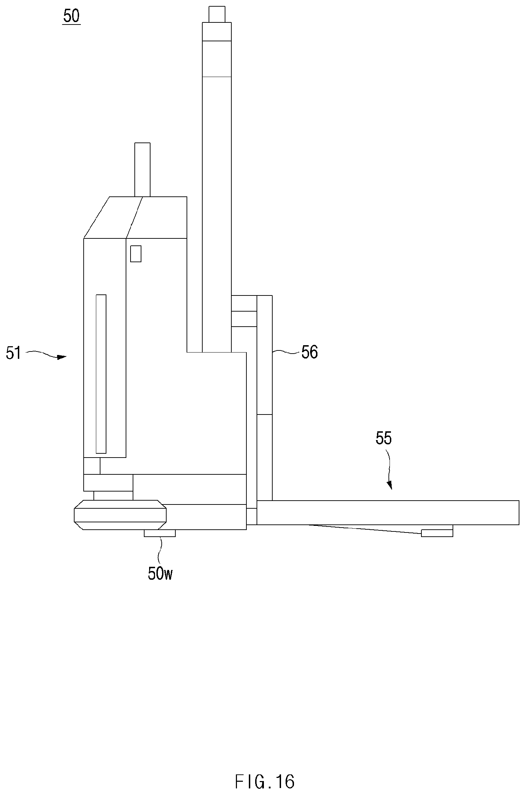

FIG. 14 is a perspective view of a mobile robot according to an embodiment of the present disclosure. FIG. 15 is a front view of a mobile robot according to an embodiment of the present disclosure. FIG. 16 is a side view of a mobile robot according to an embodiment of the present disclosure.

Referring to FIGS. 14 to 16, the mobile robot 50 may include a body 51 that extends in an upward/downward direction, a support bar 55 that extends toward one side of the body 51 to support the accommodation part 60 (see FIG. 3), and a driving wheel 50w.

A driving motor for moving the mobile robot 50 and the like may be mounted in an interior of the body 51. A mobile robot controller may be provided in an interior of the body 51 to wirelessly communicate with the controller 70 of the automatic weighing and conveying system 1 (see FIG. 19).

The support bar 55 may be coupled to a height adjustment frame 56 such that a height thereof in an upward/downward direction may be adjusted.

The driving wheel 50w may be mounted on lower sides of the body 51 and the support bar 55. The driving wheel 50w may be connected to a driving motor to roll on a floor according to a signal of the controller of the mobile robot 50.

With this structure, the mobile robot 50 may be moved according to a signal of the controller 70 of the automatic weighing and conveying system 1, and the support bar 55 may be adjusted in height according to a signal of the controller 70 to lift or lower the accommodation part 60 (see FIG. 3).

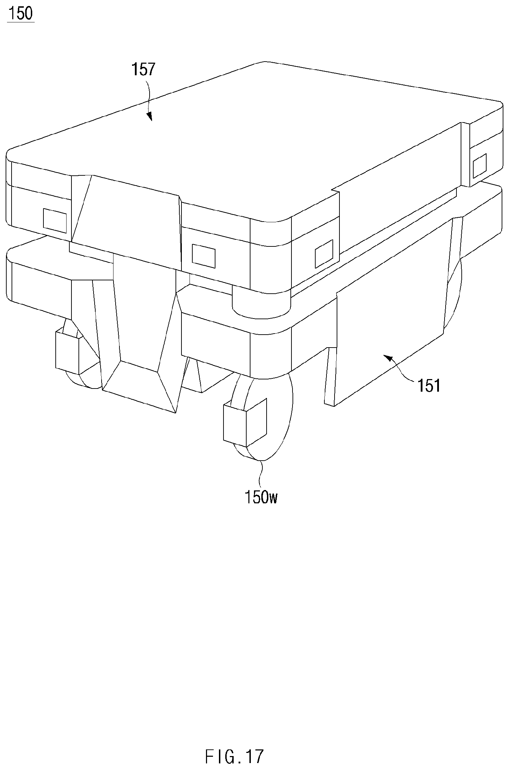

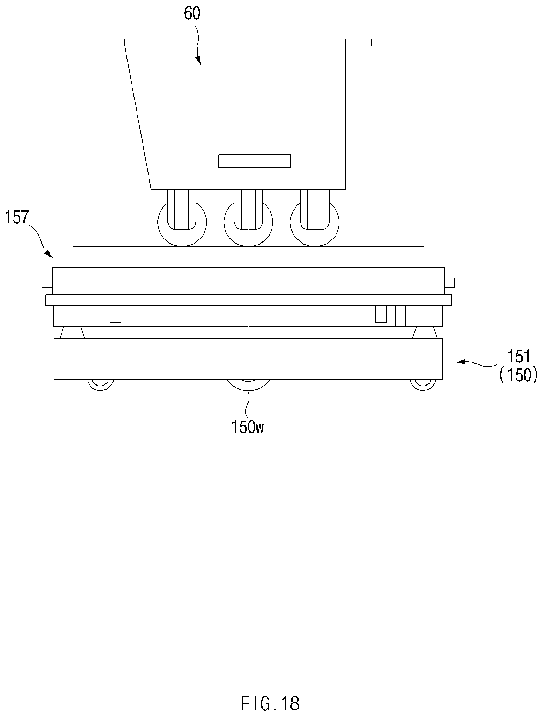

FIG. 17 is a perspective view of a mobile robot according to another embodiment of the present disclosure. FIG. 18 is a side view of a mobile robot that supports an accommodation part according to another embodiment of the present disclosure.

Referring to FIGS. 17 and 18, the mobile robot 150 according to another embodiment of the present disclosure may include a body 151 on which a driving wheel 150w that is provided to move the mobile robot 150 is mounted and that is provided above the driving wheel 150w and a support body 157 that is disposed at an upper side of the body 151 to support the accommodation part 60.

The body 151 may be formed in a plate shape that extends in a horizontal direction. A controller that may wirelessly communicate with the controller 70 (see FIG. 19) of the automatic weighing and conveying system 1 and a driving motor for operating the driving wheel 150w according to a signal of the controller may be provided in an interior of the body 151.

The body 151 may have a rectangular shape when viewed from an upper side. The support body 157 may be coupled to the body 151 on an upper side of the body 151. A height of the support body 157 in an upward/downward direction may be adjusted such that a distance from the body 151 is adjustable.

With this structure, the mobile robot 150 may be moved according to a signal of the controller 70 of the automatic weighing and conveying system 1, and a height of the support body 157 may be adjusted according to a signal of the controller 70 such that a height of the accommodation part 60 may be adjusted.

FIG. 19 is a block diagram of an automatic weighing and conveying system according to an embodiment of the present disclosure.

Referring to FIGS. 1 and 19, the automatic weighing and conveying system 1 may include the conveying part 10, the hopper parts 20, 120, 220, 320, 420, and 520, and the mobile robots 50 and 150. The automatic weighing and conveying system 1 may include the conveying part 10, the hopper parts 20, 120, 220, 320, 420, and 520, and the controller 70 that transmits and receives signals to and from the mobile robots 50 and 150.

The conveying part 10 may include a raw material conveying part 11 that is configured to convey the raw material and a frozen raw material conveying part 12 that is configured to convey the frozen raw material.

The hopper parts 20, 120, 220, 320, 420, and 520 may include a raw material sensor 20s. The raw material sensor 20s may be disposed at an upper portion or a lower portion of a hopper in which each raw material is accommodated. The raw material sensor 20s may be provided to sense an amount of the raw material that is accommodated in each hopper. Here, an amount of the raw material may be a mass, but may preferably be a volume.

The mobile robots 50 and 150 may include a driving motor (not illustrated) that is mounted in an interior of each of the bodies 51 and 151 and driving wheels 50w and 150w.

The controller 70 may include a memory 71 and a processor 72. The memory 71 may include a volatile memory of a static random access memory (S-RAM) and a dynamic random access (D-RAM) for temporarily storing data while electric power is being supplied, and a nonvolatile memory, such as a read only memory (ROM) and an erasable programmable read only memory (EPROM) for storing data even when the supply of the electric power is cut off.

The processor 72 may include various logic circuits and operation circuits, and may process data according to a program provided from the memory 71 and generate a control signal according to a processing result.

The processor 72 may operate the raw material conveying part 11 when the raw material is delivered to the raw material conveying part 11. Furthermore, the processor 72 may operate the frozen raw material conveying part 12 when the frozen raw material is delivered to the frozen raw material conveying part 12.

When the raw material is delivered to the hopper parts 20, 120, 220, 320, 420, and 520 by the conveying part 10, information on which raw material is delivered may be transmitted to the controller 70 by the raw material sensor 20s that is provided at a lower portion of the hopper parts 20, 120, 220, 320, 420, and 520. In this case, the controller 70 may display information on a type of the raw material that is currently being conveyed on the control panel 90 to assist the user in delivering the corresponding raw material to the conveying part 10 such that a more efficient raw material conveyance may be performed without confusion.

Furthermore, when any raw material is sensed by the raw material sensor 20s that is provided at an upper portion of the hopper parts 20, 120, 220, 320, 420, and 520, the raw material sensor 20s may transmit information indicating that the corresponding raw material has reached an upper limit of the hopper parts 20, 120, 220, and 320 to the controller 70. In this case, an operation of the conveying part 10 may be temporarily stopped. The controller 70 may display information on a type of the raw material that has currently reached the upper limit on the control panel 90 to cause the user to deliver a next raw material to the conveying part 10 such that a subsequent raw material conveyance may be performed more efficiently without confusion.

The raw material sensor 20s may be an optical sensor that senses the raw material, but the present disclosure is not limited thereto, and any sensor that senses the raw material may be used.

With this structure, the processor 72 may control the frozen raw material conveying part 12 to stop an operation of the frozen raw material conveying part 12 based on that a first preset amount of the frozen raw material is accommodated in the frozen raw material hopper parts 20F, 120F, 220F, 320F, 420F, and 520F. Furthermore, the processor 72 may control the raw material conveying part 11 to stop an operation of the raw material conveying part 11 based on that a second preset amount of the raw material is accommodated in the raw material hopper part 20R.

Here, the first preset amount of the first to third frozen raw material hoppers 25a, 125a, 225a, 325a, 425a, 525a to 25c, 125c, 225c, 325c, 425c, and 525c may be different from each other according to a type of the frozen raw material.

Furthermore, the second preset amount of the first raw material hopper 21a and the second raw material hopper 21b may be different from each other according to a type of the raw material.

Furthermore, the processor 72 may load information on a manufacturing method of a specific food stored in the memory 71 and display the information on the manufacturing method of the specific food on the control panel 90.

The processor 72 may move the mobile robots 50 and 150 from the first standby position WP1 to the supply position SP based on that the corresponding raw material is filled in the hoppers 21, 25, 125, 225, 325, 425, and 525 of the hopper parts 20, 120, 220, 320, 420, and 520.

That is, the processor 72 may control the mobile robots 50 and 150 to lift the accommodation part 60 and move the accommodation part 60 from the first standby position WP1 to the frozen raw material supply position FSP based on that the frozen raw material is filled in the frozen raw material hoppers 25, 125, 225, 325, 425, and 525 by a first preset amount.

The processor 72 may control the frozen raw material hopper parts 20F, 120F, 220F, 320F, 420F, and 520F to discharge a weight of the frozen raw material that is accommodated by the frozen raw material hopper parts 20F, 120F, 220F, 320F, 420F, and 520F based on that the mobile robots 50 and 150 have arrived at the frozen raw material supply position FSP. In this case, the processor 72 may control the mobile robots 50 and 150 to stop moving and remain stationary at the frozen raw material supply position FSP.

However, when a plurality of frozen raw material supply positions FSP are provided, the mobile robots 50 and 150 and the hoppers of the frozen raw material hopper parts 20F, 120F, 220F, 320F, 420F, and 520F may be controlled at the respective frozen raw material supply positions FSP1, FSP2, and FSP3 as described above.

Furthermore, the processor 72 may control the mobile robots 50 and 150 such that the accommodation part 60 is supplied with the raw material from the raw material hopper part 20R after being supplied with the frozen raw material from the frozen raw material hopper parts 20F, 120F, 220F, 320F, 420F, and 520F. With the structure, when the raw material is inserted into the accommodation part 60 earlier than the frozen raw material, a problem of the raw material adhering to an inner surface of the accommodation part 60 may be prevented.

Based on that the mobile robot 50 and 150 has arrived at the raw material supply position RSP, the processor 72 may control the raw material hopper part 20R to discharge the raw material by a predetermined weight.

However, when a plurality of raw material supply positions RSP are provided, the mobile robots 50 and 150 and the hopper of the raw material hopper part 20R may be controlled at the respective raw material supply positions RSP1, RSP2, and RSP3 as described above.

When discharge of the raw material stored by the hopper part 20 by a preset amount is completed, the processor 72 may control the mobile robot 50 and 150 to be moved to the second standby position WP2.

The automatic weighing and conveying system 1 may include weighing parts 61, 161, 261, 361, 461, and 561 that are configured to measure a weight of the accommodation part 60 located at the supply positions FSP and RSP.

The weighing parts 61, 161, 261, 361, 461, and 561 may include frozen raw material weighing parts 61F, 161F, 261F, 361F, 461F, and 561F that are provided at the frozen raw material supply positions FSP to measure a weight of the accommodation part 60 located at the frozen raw material supply position FSP, and a raw material weighing part 61R that is provided at the raw material supply position RSP to measure a weight of the accommodation part 60 located at the raw material supply position RSP.

The frozen raw material weighing parts 61F, 161F, 261F, 361F, 461F, and 561F may measure a first weight of the accommodation part 60 that has arrived at the frozen raw material supply position FSP and a second weight of the accommodation part 60 after discharge of the frozen raw material from the frozen raw material hopper parts 20F, 120F, 220F, 320F, 420F, and 520F is completed.

The raw material weighing part 61R may measure a third weight of the accommodation part 60 that has arrived at the raw material supply position RSP and a fourth weight of the accommodation part 60 after discharge of the raw material from the raw material hopper part 20R is completed.

The weighing parts 61, 161, 261, 361, 461, and 561 may transmit and receive signals to and from the controller 70. In more detail, the weighing parts 61, 161, 261, 361, 461, and 561 may transmit the first to fourth weights of the accommodation part 60 to the controller 70 and may receive, from the controller 70, a signal to measure a weight of the accommodation part 60 based on that the mobile robot 50 and 150 has arrived at the supply positions RSP and FSP.

The processor 72 may receive the first weight and the second weight from the frozen raw material weighing parts 61F, 161F, 261F, 361F, 461F, and 561F and may compare and determine whether a difference between the second weight and the first weight is within a preset weight range of the frozen raw material. Furthermore, the processor 72 may receive the third weight and the fourth weight from the raw material weighing part 61R and may compare and determine whether a difference between the fourth weight and the third weight is within a preset weight range of the raw material.

The processor 72 may control the control panel 90 to notify a user of a weight by which a difference between the second weight and the first weight deviates from a preset weight range of the frozen raw material or a weight by which a difference between the fourth weight and the third weight deviates from a preset weight range of the raw material, based on the difference between the second weight and the first weight being outside the preset weight range of the frozen raw material or the difference between the fourth weight and the third weight being outside the preset weight range of the raw material.

The control panel 90 may be controlled to maintain a notification window on a display before being manually terminated by a user.

The automatic weighing and conveying system 1 may further include a speaker 80 that transmits and receives signals to and from the controller 70 and a mobile robot conveying part 462.

The processor 72 may control the speaker 80 such that an alarm of the speaker 80 is generated, and may control the mobile robot conveying part 462 to stop an operation thereof, based on a difference between the second weight and the first weight being outside a preset weight range of the frozen raw material or a difference between the fourth weight and the third weight being outside a preset weight range of the raw material.

Furthermore, the processor 72 may operate the mobile robot conveying part 462 to move the mobile robot 50 and 150 located at the frozen raw material supply position FSP to the raw material supply position RSP, based on a difference between the second weight and the first weight being within a preset weight range of the frozen raw material.

Furthermore, the processor 72 may control the mobile robot 50 and 150 to be moved from the raw material supply position RSP to the second standby position WP2, based on a difference between the fourth weight and the third weight being within a preset weight range of the raw material.

The above-described frozen raw material supply position FSP and the raw material supply position RSP may include the first to third frozen raw material supply positions FSP1, FSP2, and FSP3 and the first and second raw material supply positions RSP1 and RSP2, respectively, and may be a principle that is applied at each position.

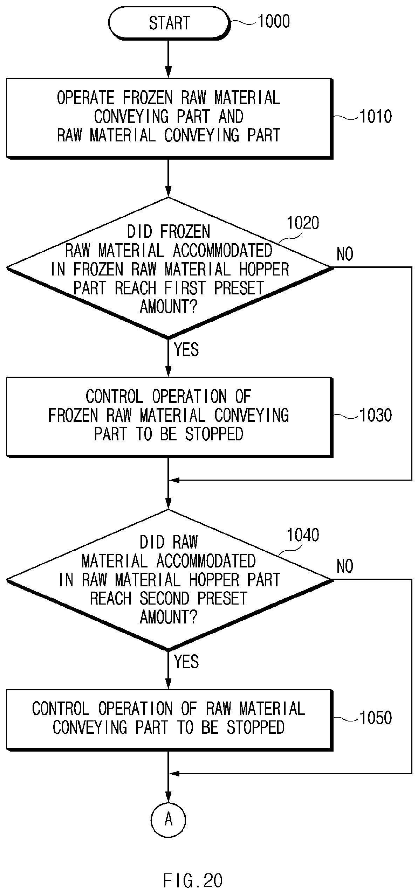

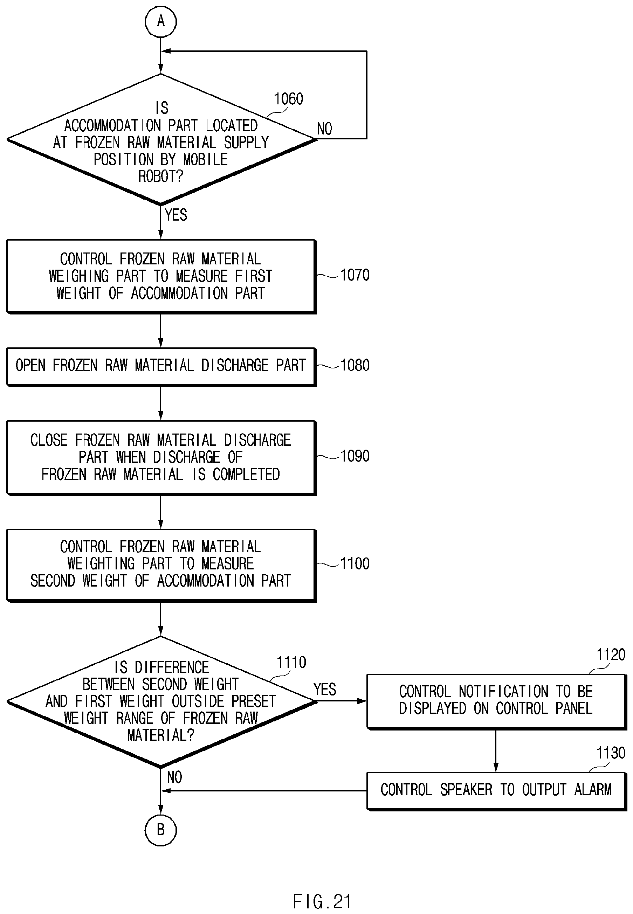

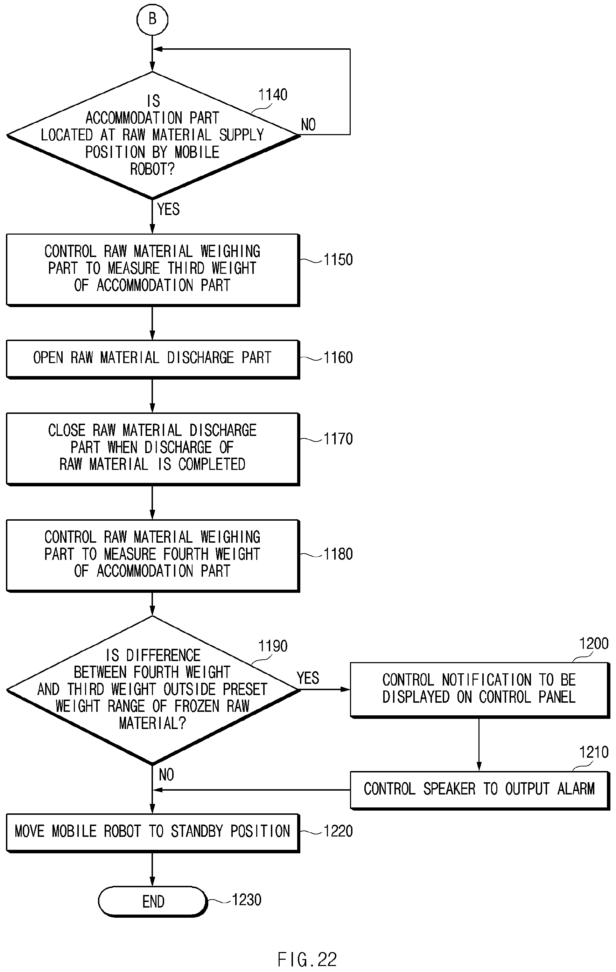

FIGS. 20 to 22 are flowcharts illustrating a method for controlling an automatic weighing and conveying system according to an embodiment of the present disclosure.

Referring to FIGS. 20 to 22, the processor 72 illustrated in FIG. 19 may control the mobile robot 50 and 150, the hopper parts 20, 120, 220, 320, 420, and 520, the conveying part 10, the mobile robot conveying part 462, the control panel 90, and the speaker 80 as follows.

When the automatic weighing and conveying system 1 starts an operation (1000), the processor 72 may control the frozen raw material conveying part 12 and the raw material conveying part 11 to transport the raw material (1010).

Thereafter, when each frozen raw material is stored in each hopper of the frozen raw material hopper parts 20F, 120F, 220F, 320F, 420F, and 520F by a first preset amount corresponding to a storage capacity (Yes of 1020), the processor 72 may control the frozen raw material conveying part 12 to stop the frozen raw material conveying part 12 that conveys the frozen raw material (1030).

On the other hand, when the frozen raw material is not accommodated in each hopper of the frozen raw material hopper parts 20F, 120F, 220F, 320F, 420F, and 520F by a first preset amount corresponding to a storage capacity (No of 1020), the processor 72 may continuously operate the frozen raw material conveying part 12.

Thereafter, the processor 72 may determine whether the raw material is accommodated in the hoppers 21a and 21b of the raw material hopper part 20R by a second preset amount corresponding to a storage capacity (1040).

When the raw material is accommodated in the hoppers 21a and 21b of the raw material hopper part 20R by a second preset amount (Yes of 1040), the processor 72 may control the raw material conveying part 11 to stop an operation thereof (1050).

On the other hand, when the raw material is not accommodated in the hoppers 21a and 21b of the raw material hopper part 20R by a second preset amount (No of 1040), the processor 72 may maintain an operation of the raw material conveying part 11.

Thereafter, the processor 72 may cause the mobile robot 50 and 150 to move while carrying the accommodation part 60 so as to move the mobile robot 50 and 150 to the frozen raw material supply position FSP.

Based on that the mobile robot 50 and 150 has arrived at the frozen raw material supply position FSP, the processor 72 may control the frozen raw material weighing parts 61F, 161F, 261F, 361F, 461F, and 561F to measure the first weight of the accommodation part 60 (1070).

Thereafter, the processor 72 may control the frozen raw material hopper parts 20F, 120F, 220F, 320F, 420F, and 520F to open the frozen raw material discharge parts 26, 126, 226, 326, 426, and 526 (1080).

When discharge of the frozen raw material through the frozen raw material discharge parts 26, 126, 226, 326, 426, and 526 is completed (when the frozen raw material is discharged by a preset amount), the processor 72 may close the frozen raw material discharge parts 26, 126, 226, 326, 426, and 526 (1090).

Thereafter, the processor 72 may control the frozen raw material weighing parts 61F, 161F, 261F, 361F, 461F, and 561F to measure the second weight of the accommodation part 60 (1100).

The processor 72 may compare and determine whether a weight obtained by subtracting the first weight from the second weight is within a preset weight range of the frozen raw material (1110), and when the weight obtained by subtracting the first weight from the second weight is outside the preset weight range of the frozen raw material (No of 1110), may control the control panel 90 to notify a user of a weight corresponding to a degree to which a difference between the second weight and the first weight deviates from the preset weight range of the frozen raw material (1120). Furthermore, the processor 72 may control an alarm of the speaker 80 to be output consecutively (1130).

The processor 72 may control the mobile robot 50 and 150 to be moved from the frozen raw material supply position FSP to the raw material supply position RSP, based on a difference between the second weight and the first weight being within a preset weight range of the frozen raw material.

The processor 72 may control the raw material weighing part 61R to measure the third weight of the accommodation part 60, based on the mobile robot 50 and 150 having arrived at the raw material supply position RSP (Yes of 1140) (1150).

Thereafter, the processor 72 may open the raw material discharge parts 22a and 22b (1160), and may close the raw material discharge parts 22a and 22b when discharge of the raw material by a preset weight of the raw material is completed (1170).

When the raw material discharge part 22a and 22b is closed, the processor 72 may control the raw material weighing part 61R to measure the fourth weight of the accommodation part 60 (1180).

The processor 72 may compare and determine whether a weight obtained by subtracting the third weight from the fourth weight is within a preset weight range of the raw material (1190), and when the weight obtained by subtracting the third weight from the fourth weight is outside the preset weight range of the raw material (Yes of 1190), may control the control panel 90 to notify a user of a weight corresponding to a degree to which a difference between the fourth weight and the third weight deviates from the preset weight range of the raw material (1200). Furthermore, the processor 72 may control an alarm of the speaker 80 to be output (1210).

On the other hand, the processor 72 may determine whether a weight obtained by subtracting the third weight from the fourth weight is within a preset weight range of the raw material, and when the weight obtained by subtracting the third weight from the fourth weight is within the preset weight range of the raw material (No of 1190), may control the mobile robot 50 and 150 to be moved to the second standby position WP2 (1220).

When this series of processes is continuously performed, weighing and conveying of the frozen raw material and the raw material may be automatically performed, so that more accurate weighing and productivity may be significantly improved.

That is, according to this structure, because a process of controlling an amount of each raw material to be discharged by the hopper parts 20, 120, 220, and 320 and measuring an amount (preferably, a mass) of an entirety of the accommodation part 60 that accommodates the raw material and the frozen raw material of the mobile robot 50 and 150 is performed, accuracy may be improved as compared with weighing arbitrarily adjusted by a user, so that an error in a ratio of each raw material with respect to a food manufacturing method may be reduced. Accordingly, seasoning or taste of each food may be uniform, so that satisfaction from a consumer perspective may be improved.

Here, a difference between the second weight and the first weight of the mobile robot 50 and 150 may be a weight of the frozen raw material supplied to the accommodation part 60, and a difference between the fourth weight and the third weight of the mobile robot 50 and 150 may be a weight of the raw material supplied to the accommodation part 60.

Hereinafter, an arrangement of a configuration of the automatic weighing and conveying system 1 illustrated in FIG. 1 will be described with focus on differences from other embodiments. Configurations that are not mentioned may correspond to the configurations described in FIG. 1, and thus will be omitted.

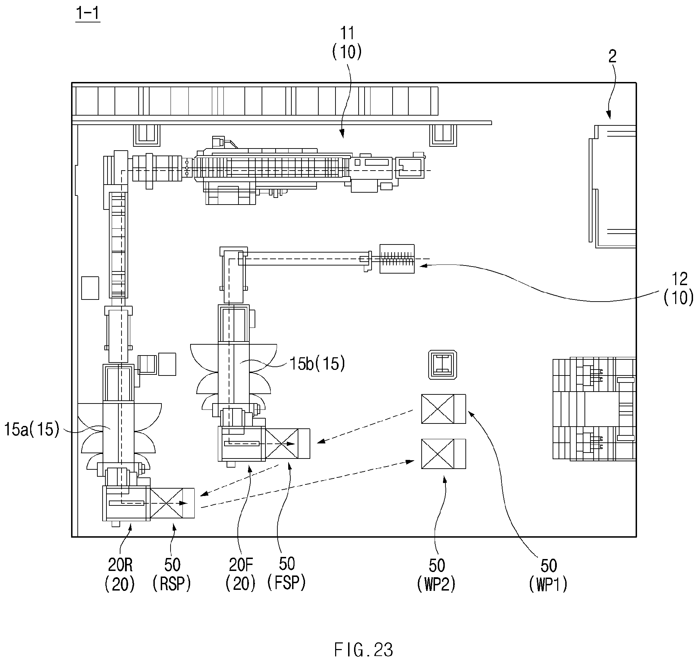

FIG. 23 is a schematic view of an automatic weighing and conveying system according to another embodiment of the present disclosure.

Referring to FIG. 23, an automatic weighing and conveying system 1-1 according to another embodiment of the present disclosure may include a single conveying rail 15a that receives the raw material from the raw material conveying part 11.

According to this structure, raw materials, such as fresh chives and fresh green onions, may be conveyed to the raw material conveying part 11 with a time difference, and a single raw material hopper part 20R that accommodates the fresh chives and the fresh green onions may discharge the respective raw materials with a time difference.

Furthermore, frozen raw materials, such as frozen chives and frozen green onions, may be conveyed to the frozen raw material conveying part 12 with a time difference, and a single frozen raw material hopper part 20F that accommodates the frozen chives and the frozen green onions may discharge the respective frozen raw materials with a time difference.

With this structure, the frozen raw material supply position FSP and the raw material supply position RSP of the mobile robot 50 and the accommodation part 60 may be fixed to a single position, so that movement of the mobile robot 50 may be reduced.

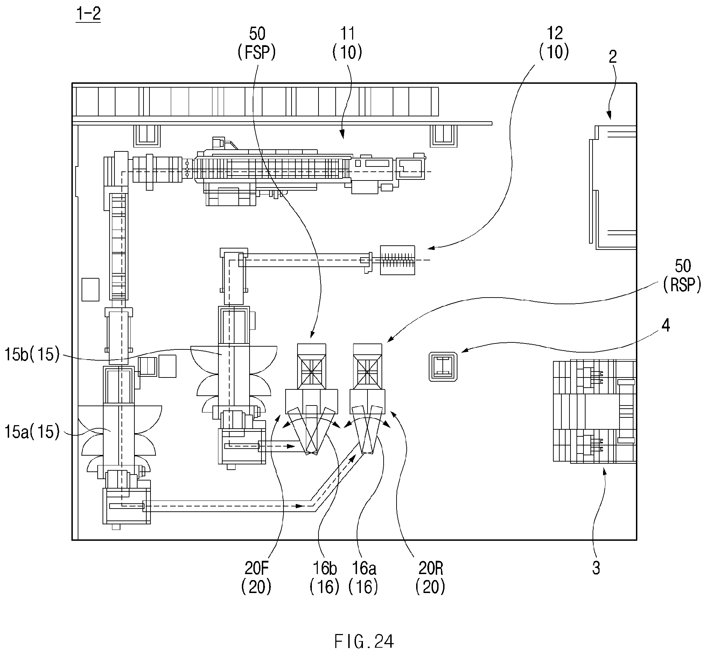

FIG. 24 is a schematic view of an automatic weighing and conveying system according to still another embodiment of the present disclosure.

Referring to FIG. 24, an automatic weighing and conveying system 1-2 according to another embodiment of the present disclosure, unlike the automatic weighing and conveying system 1 illustrated in FIG. 1, may include the raw material conveying part 11 having a single conveying rail 15a and, at the same time, the frozen raw material conveying part 12 having a single conveying rail 15b.

The raw material hopper part 20R and the frozen raw material hopper part 20F may be disposed to be adjacent to each other so as to reduce movement of the mobile robot 50.

Furthermore, as compared with FIG. 23, each of the conveying rail 15b of the frozen raw material hopper part 20F and the conveying rail 15a of the raw material hopper part 20R may be connected to the first to third frozen raw material hoppers 25a, 25b, and 25c (see FIG. 3) and the first and second raw material hoppers 21a and 21b.

More specifically, the first conveying rail 15a may supply the first raw material and the second raw material to each of the first raw material hopper 21a and the second raw material hopper 21b by the first switching rail 16a.

Similarly, the second conveying rail 15b may supply the first frozen raw material to the third frozen raw material to each of the first frozen raw material hopper 25a to the third frozen raw material hopper 25c by the second switching rail 16b.

Furthermore, as compared with FIG. 1, the raw material hopper part 20R and the frozen raw material hopper part 20F may be located relatively at a central portion in an arrangement of the automatic weighing and conveying system 1, so that movement of the mobile robot 50 may be reduced to reduce a movement time of the mobile robot 50.

With this structure, movement of the mobile robot 50 may be shortened, and each of the frozen raw material supply position FSP and the raw material supply position RSP may not be moved to positions according to a plurality of frozen raw material hoppers and a plurality of raw material hoppers, and the mobile robot 50 may be moved such that the accommodation part 60 receives the respective raw materials at each supply position FSP and RSP.

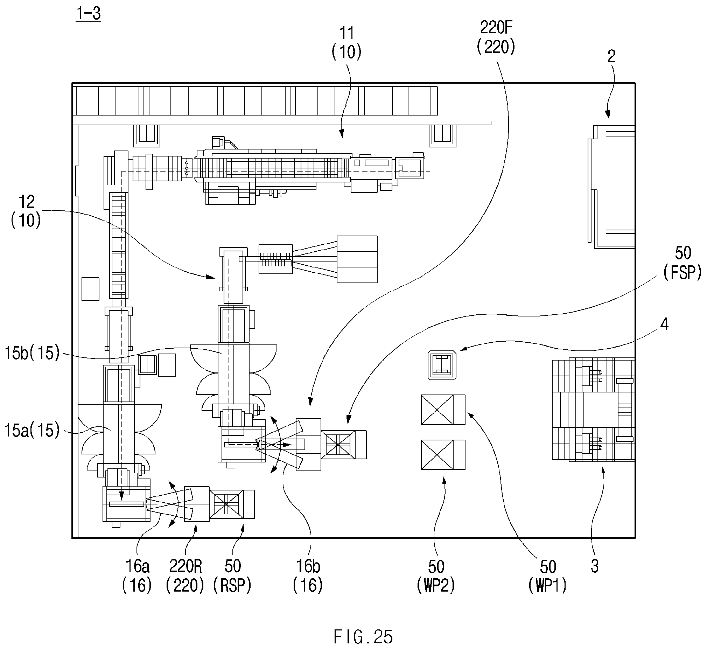

FIG. 25 is a schematic view of an automatic weighing and conveying system according to still another embodiment of the present disclosure.

As compared with FIGS. 1 and 23, an automatic weighing and conveying system 1 to3 of FIG. 25 may include a raw material hopper part 20R and a frozen raw material hopper part 20F, each of which includes a plurality of raw material hoppers and frozen raw material hoppers 225a to 225c (see FIG. 7), and may be directly connected to the first conveying rail 15a and the second conveying rail 15b.

In this case, a conveying distance of the raw material and the frozen raw material may be relatively shortened as compared with FIG. 24.

Furthermore, in relation to the frozen raw material conveying part 12, a portion into which the first to third frozen raw materials are introduced into the frozen raw material conveying part 12 may be divided into three portions, so that the first frozen raw material to the third frozen raw material may not be mixed with each other.

With this structure as well, the first raw material and the second raw material from the first conveying rail 15a may be delivered to the first raw material hopper and the second raw material hopper by the first switching rail 16a, and after primary weighing is performed at a discharge part of the first raw material hopper and the second raw material hopper, secondary weighing may be performed at the accommodation part 60.

Furthermore, the first frozen raw material to the third frozen raw material from the second conveying rail 15b may be delivered to the first frozen raw material hopper 225a to the third frozen raw material hopper 225c by the second switching rail 16b, and after primary weighing is performed at the discharge parts 226a, 226b, and 226c of the first frozen raw material hopper 225a to the third frozen raw material hopper 225c, secondary weighing may be performed at the accommodation part 60.

FIG. 26 is a schematic view of an automatic weighing and conveying system according to still another embodiment of the present disclosure.

An automatic weighing and conveying system 1 to 4 of FIGS. 11 and 26 may include the frozen raw material hopper part 420F and the raw material hopper part 420R disposed to be adjacent to each other.

According to this structure, when the accommodation part 60 is moved to the first frozen raw material supply position FSP1 by the mobile robot 50, the accommodation part 60 may be automatically moved to the raw material supply position RSP in response to a signal of the controller 70 (see FIG. 19).

More specifically, the accommodation part 60 that is transported by the mobile robot 50 may receive the first frozen raw material at the first frozen raw material supply position FSP1, and as the mobile robot 50 is moved by the mobile robot conveying part 462, the accommodation part 60 may receive the second frozen raw material at the second frozen raw material supply position FSP2. Thereafter, as the mobile robot 50 is moved by the mobile robot conveying part 462, the accommodation part 60 may be moved to the third frozen raw material supply position FSP3 to receive the third frozen raw material.

In this case, weights of the first frozen raw material to the third frozen raw material supplied to the accommodation part 60 may be measured through the first to third frozen raw material weighing parts 461Fa to 461Fc, so that signals may be transmitted to and received from the controller 70.

Thereafter, the mobile robot 50 may be moved from the third frozen raw material supply position FSP3 to the first raw material supply position RSP1 by the mobile robot conveying part 462 such that the accommodation part 60 receives the first raw material, and as the mobile robot 50 is moved by the mobile robot conveying part 462, the accommodation part 60 may receive the second raw material at the second raw material supply position RSP2.

In this case as well, at each of the first raw material supply position RSP1 and the second raw material supply position RSP2, the first raw material weighing part and the second raw material weighing part may measure weights of amounts of the first raw material and the second raw material supplied to the accommodation part 60, so that signals may be transmitted to and received from the controller 70.

As such, the mobile robot conveying part 462 may be provided between the frozen raw material supply position FSP and the raw material supply position RSP of the mobile robot 50. As an example, the mobile robot conveying part 462 may be a conveyor belt that is installed on a floor to convey the mobile robot 50. Furthermore, the mobile robot conveying part 462 may be a component for lifting the mobile robot 50 to move the mobile robot 50 horizontally.

To have such a structure, the first frozen raw material hopper to the third frozen raw material hopper and the first raw material hopper and the second raw material hopper may be arranged in a line.

The mobile robot conveying part 462, the frozen raw material hopper part 420F, and the raw material hopper part 420R may all be controlled according to a signal of the controller 70 such that a time taken for each raw material to be discharged is optimized.

The above description is merely an example of the technical idea of the present disclosure, and various modifications and variations may be made by one skilled in the art without departing from the essential characteristic of the present disclosure. Accordingly, embodiments of the present disclosure are intended not to limit but to explain the technical idea of the present disclosure, and the scope and spirit of the present disclosure is not limited by the above embodiments. The scope of protection of the present disclosure should be construed by the attached claims, and all equivalents thereof should be construed as being included within the scope of the present disclosure.

## Claims

1. An automatic weighing and conveying system comprising:
a frozen raw material conveying part configured to convey frozen raw material;
a frozen raw material hopper part configured to store and discharge the frozen raw material supplied by the frozen raw material conveying part;
a raw material conveying part distinguished from the frozen raw material conveying part and configured to convey raw material;
a raw material hopper part distinguished from the frozen raw material hopper part and configured to store and discharge the raw material supplied by the raw material conveying part; and
a processor configured to control the frozen raw material conveying part and the raw material conveying part to stop an operation of the frozen raw material conveying part based on the frozen raw material being accommodated in the frozen raw material hopper part in a first preset amount, and to stop an operation of the raw material conveying part based on the raw material being accommodated in the raw material hopper part in a second preset amount.

2. The automatic weighing and conveying system of claim 1, further comprising:
a mobile robot configured to carry an accommodation part for accommodating the frozen raw material discharged from the frozen raw material hopper part and the raw material discharged from the raw material hopper part and to convey the accommodation part to a frozen raw material supply position at which the frozen raw material is supplied from the frozen raw material hopper part and to a raw material supply position at which the raw material is supplied from the raw material hopper part.

3. The automatic weighing and conveying system of claim 2, wherein the processor is configured to:
control the frozen raw material hopper part to discharge the frozen raw material from the frozen raw material hopper part based on the accommodation part being located at the frozen raw material supply position by the mobile robot; and
control the raw material hopper part to discharge the raw material from the raw material hopper part based on the accommodation part being located at the raw material supply position by the mobile robot.

4. The automatic weighing and conveying system of claim 2, further comprising:
a weighing part including a frozen raw material weighing part provided at the frozen raw material supply position to measure a weight of the accommodation part located at the frozen raw material supply position, and a raw material weighing part provided at the raw material supply position to measure a weight of the accommodation part located at the raw material supply position.

5. The automatic weighing and conveying system of claim 4, wherein frozen raw material weighing part measures a first weight of the accommodation part upon arrival at the frozen raw material supply position and a second weight of the accommodation part after completion of discharge of the frozen raw material from the frozen raw material hopper part, and
wherein the raw material weighing part measures a third weight of the accommodation part upon arrival at the raw material supply position and a fourth weight of the accommodation part after completion of discharge of the raw material from the raw material hopper part.

6. The automatic weighing and conveying system of claim 5, wherein the processor is configured to:
compare and determine whether a difference between the second weight and the first weight is within a preset weight range of the frozen raw material, and
compare and determine whether a difference between the fourth weight and the third weight is within a preset weight range of the raw material.

7. The automatic weighing and conveying system of claim 6, further comprising:
a control panel,
wherein the processor is configured to:
control the control panel to notify a user of the difference between the second weight and the first weight being outside the preset weight range of the frozen raw material or the difference between the fourth weight and the third weight being outside the preset weight range of the raw material, based on the difference between the second weight and the first weight being outside the preset weight range of the frozen raw material or the difference between the fourth weight and the third weight being outside the preset weight range of the raw material.

8. The automatic weighing and conveying system of claim 6, further comprising:
a speaker,
wherein the processor is configured to:
control the speaker to output an alarm based on the difference between the second weight and the first weight being outside the preset weight range of the frozen raw material or the difference between the fourth weight and the third weight being outside the preset weight range of the raw material.

9. The automatic weighing and conveying system of claim 3, wherein the raw material hopper part is positioned at one side of the frozen raw material hopper part to be adjacent to the frozen raw material hopper part.

10. The automatic weighing and conveying system of claim 6, wherein the frozen raw material supply position and the raw material supply position are arranged in a line; and
wherein the automatic weighing and conveying system further comprises a mobile robot conveying part configured to move the mobile robot located at one of the frozen raw material supply position and the raw material supply position to the other of the frozen raw material supply position and the raw material supply position.

11. The automatic weighing and conveying system of claim 10, wherein the mobile robot conveying part is configured to move the mobile robot located at the frozen raw material supply position to the raw material supply position.

12. The automatic weighing and conveying system of claim 10, wherein the processor is configured to:
operate the mobile robot conveying part to convey the mobile robot located at the frozen raw material supply position to the raw material supply position based on the difference between the second weight and the first weight being within the preset weight range of the frozen raw material.

13. The automatic weighing and conveying system of claim 6, wherein the mobile robot is moved from the raw material supply position to a standby position based on the difference between the fourth weight and the third weight being within the preset weight range of the raw material.

14. The automatic weighing and conveying system of claim 1, wherein the frozen raw material hopper part includes a first frozen raw material hopper configured to store and discharge a first frozen raw material and a second frozen raw material hopper configured to store and discharge a second frozen raw material distinguished from the first frozen raw material, and
wherein the frozen raw material conveying part includes:
a conveying rail configured to receive and convey the first frozen raw material and the second frozen raw material; and
a switching rail including one end configured to receive the first frozen raw material and the second frozen raw material from the conveying rail and convey the first frozen raw material and the second frozen raw material to the first frozen raw material hopper and the second frozen raw material hopper from the conveying rail, respectively, and an opposite end having a position switched between the first frozen raw material hopper and the second frozen raw material hopper with respect to the one end.

15. The automatic weighing and conveying system of claim 1, wherein the raw material hopper part includes a first raw material hopper configured to store and discharge a first raw material and a second raw material hopper configured to store and discharge a second raw material distinguished from the first raw material, and
wherein the raw material conveying part includes:
a conveying rail configured to receive and convey the first raw material and the second raw material; and
a switching rail including one end configured to receive the first raw material and the second raw material from the conveying rail and to convey the first raw material and the second raw material to the first raw material hopper and the second raw material hopper from the conveying rail, respectively, and an opposite end having a position switched between the first raw material hopper and the second raw material hopper with respect to the one end.

16. A method for controlling an automatic weighing and conveying system, the method comprising:
controlling a frozen raw material conveying part and a raw material conveying part to convey frozen raw material and raw material to a frozen raw material hopper part and a raw material hopper part, respectively;
controlling the frozen raw material conveying part to stop operation based on the frozen raw material being accommodated in the frozen raw material hopper part in a first preset amount;
controlling the raw material conveying part to stop operation based on the raw material being accommodated in the raw material hopper part in a second preset amount;
moving a mobile robot carrying an accommodation part configured to receive the frozen raw material from the frozen raw material hopper part and the raw material from the raw material hopper part to a frozen raw material supply position at which the frozen raw material is supplied from the frozen raw material hopper part;
controlling the frozen raw material hopper part to discharge the frozen raw material based on the accommodation part arriving at the frozen raw material supply position by the mobile robot;
moving the mobile robot carrying the accommodation part located at the frozen raw material supply position to a raw material supply position at which the raw material is supplied from the raw material hopper part based on completion of discharge of the frozen raw material; and
controlling the raw material hopper part to discharge the raw material based on the accommodation part arriving at the raw material supply position by the mobile robot.

17. The method of claim 16, further comprising:
controlling a frozen raw material weighing part provided at the frozen raw material supply position to measure a first weight of the accommodation part based on the accommodation part arriving at the frozen raw material supply position;
controlling the frozen raw material weighing part to measure a second weight of the accommodation part based on completion of discharge of the frozen raw material from the frozen raw material hopper part;
comparing and determining whether a difference between the second weight and the first weight is within a preset weight range of the frozen raw material; and
controlling a control panel to notify a user based on the difference between the second weight and the first weight being outside the preset weight range of the frozen raw material.

18. The method of claim 17, further comprising:
controlling a raw material weighing part provided at the raw material supply position to measure a third weight of the accommodation part based on the accommodation part arriving at the raw material supply position;
controlling the raw material weighing part to measure a fourth weight of the accommodation part based on completion of discharge of the raw material from the raw material hopper part;
comparing and determining whether a difference between the fourth weight and the third weight is within a preset weight range of the raw material; and
controlling the control panel to notify a user based on the difference between the fourth weight and the third weight being outside the preset weight range of the raw material.

19. The method of claim 17, further comprising:
operating a mobile robot conveying part configured to convey the mobile robot from the frozen raw material supply position to the raw material supply position based on the difference between the second weight and the first weight being within the preset weight range of the frozen raw material.

20. The method of claim 18, further comprising:
moving the mobile robot from the raw material supply position to a standby position based on the difference between the fourth weight and the third weight being within the preset weight range of the raw material.
